# EUROPÄISCHE PATENTANMELDUNG

(11) **EP 4 753 069 A1**
(43) Veröffentlichungstag der Anmeldung: **03.06.2026**
(21) Anmeldenummer: 24215648.7
(22) Anmeldetag: 27.11.2024
(51) Int. Cl.: H01Q 1/22, H01Q 1/38, H01Q 9/04, H01Q 21/20, H01Q 21/24, H01Q 1/52, H01Q 17/00

(54) **ANTENNENANORDNUNG, TRANSCEIVERANORDNUNG UND KOMMUNIKATIONSSYSTEM**

(71) Anmelder: Rosenberger Hochfrequenztechnik GmbH & Co. KG, 83413 Fridolfing (DE)
(72) Erfinder: Stolle, Reinhard, 83413 Fridolfing (DE); Theil, Markus Michael, 83413 Fridolfing (DE)
(74) Vertreter: Lorenz & Kollegen

(57) **Zusammenfassung**

Die Antennenanordnung (1;1') weist mehrere Antennen (2₁,2_{2,}2₃,2₄,2₅,2₆,2₇,2₇,2₈,...,2_{N};2₁',2₂',2₃',2₄',2₅',...,2_{N}) auf, welche jeweils ausgebildet sind, elektromagnetische Wellen abzustrahlen und gleichzeitig zu empfangen. Die Antennen (2₁,2_{2,}2₃,2₄,2₅,2₆,2₇,2₈,...,2_{N};2₁',2₂',2₃',2₄',2₅',...,2_{N}') sind jeweils um eine gemeinsame Mittenachse (Z) herum angeordnet. Zugehörige Schwerpunkte (S) von jeweils unmittelbar benachbarten Antennen
(2₁,2_{2,}2₃,2₄,2₅,2₆,2₇,2₈,...,2_{N};2₁',2₂',2₃',2₄',2₅',...,2_{N}') sind jeweils äquidistant voneinander entfernt. Jede Antenne (2₁,2_{2,}2₃,2₄,2₅,2₆,2₇,2₈,...,2_{N};2₁',2₂',2₃',2₄',2₅',...,2_{N}') ist jeweils mit wenigstens einer ersten Signalleitung (5) der Transceiveranordnung (7;7') und wenigstens einer zweiten Signalleitung (6) der Transceiveranordnung (7;7') elektrisch und/oder magnetisch verbunden. In jeder Antenne
(2₁,2_{2,}2₃,2₄,2₅,2₆,2₇,2₈,...,2_{N};2₁',2₂',2₃',2₄',2₅',...,2_{N}') ist jeweils die wenigstens eine erste Signalleitung (5) jeweils zur wenigstens einen zweiten Signalleitung (6) orthogonal orientiert. Die Signalleitungen (5, 6) sind jeweils derart ausgebildet, dass die erste Signalleitung (5) ein Sendesignal für die abgestrahlte elektromagnetische Welle und die zweite Signalleitung (6) ein Empfangssignal der empfangenen elektromagnetischen Welle übertragen oder die erste Signalleitung (5) das Empfangssignal und die zweite Signalleitung (6) das Sendesignal übertragen.

## Beschreibung

### GEBIET DER ERFINDUNG

Die vorliegende Erfindung betrifft eine Antennenanordnung, welche mehrere Antennen aufweist.

Die vorliegende Erfindung betrifft ferner eine Transceiveranordnung, welche eine Antennenanordnung, eine SendeEinheit und eine Empfangs-Einheit aufweist.

Die vorliegende Erfindung betrifft schließlich auch ein Kommunikationssystem mit zwei Transceiveranordnungen zur Bereitstellung einer drahtlosen Inband-Vollduplex-Übertragung zwischen den Transceiveranordnungen.

### TECHNISCHER HINTERGRUND

Zur kontaktlosen bzw. drahtlosen Daten- und/oder Energieübertragung wird eine Antennenanordnung aus einer Antenne oder mehreren Antennen verwendet. Zum gleichzeitigen Senden und Empfangen elektromagnetischer Wellen (sogenannter Vollduplex-Übertragungsbetrieb), insbesondere zum gleichzeitigen Senden und Empfangen elektromagnetischer Wellen bei gleicher Frequenz bzw. im gleichen Frequenzband (sogenannter Inband-Vollduplex-Übertragungsbetrieb), ist eine hohe elektromagnetische Dämpfung bzw. Isolation zwischen dem Sende- und Empfangskanal innerhalb derselben Transceiveranordnung wesentlich, um ein Übersprechen bzw. Interferenzen zwischen dem Sende- und Empfangskanal zu vermeiden.

Aus der EP 4 150 708 B1 ist eine Antennenanordnung, eine Transceiveranordnung und ein Kommunikationssystem für eine Inband-Vollduplex-Übertragung bekannt. Die Antennenanordnung weist ein Sendeantennenpaar und ein Empfangsantennenpaar auf, welche jeweils symmetrisch gespeist sind. Neben der symmetrischen Speisung weist jede Empfangsantenne jeweils zu beiden Sendeantennen denselben Mitte-zu-Mitte-Abstand auf, um das Übersprechen zwischen dem Sendeantennenpaar und dem Empfangsantennenpaar zumindest zu reduzieren.

Eine derartig ausgebildete Antennenanordnung sowie eine Transceiveranordnung, welche eine derart ausgebildete Antennenanordnung aufweist, kommen vorzugsweise in einem Kommunikationssystem zur drahtlosen Übertragung zwischen zueinander beweglich angeordneten Einrichtungen, insbesondere zwischen um eine gemeinsame Drehachse zueinander rotierenden Einrichtungen, zum Einsatz. Auf diese Weise kann beispielsweise auf einen gemeinsamen Schleifringkontakt oder ein gemeinsames Verbindungskabel verzichtet werden.

Neben der Übertragung von Energie im unteren Leistungsbereich und von Daten ist vielfach auch die Übertragung eines hydraulischen oder pneumatischen Mediums sowie von Energie im höheren Leistungsbereich in entsprechenden Kabeln zwischen den Einrichtungen gefordert. Zwischen zueinander rotierenden Einrichtungen ist eine derartige Verkabelung üblicherweise im Bereich der gemeinsamen Rotationsachse geführt. Bei einer Antennenanordnung gemäß der EP 4 150 708 B1 scheidet eine derart geführte Verkabelung aus.

Auch ist eine Datenübertragung über mehrere Übertragungskanäle mit jeweils unterschiedlichen Übertragungsprotokollen, beispielsweise eine Hochgeschwindigkeitsdatenübertragung neben einer Datenübertragung mit einer geringeren Zeitanforderung, bei einer Antennenanordnung gemäß der EP 4 150 708 B1 nicht möglich.

Dies zusammen ist ein Zustand, den es zu verbessern gilt.

### BESCHREIBUNG DER ERFINDUNG

Vor diesem Hintergrund liegt der vorliegenden Erfindung die Aufgabe zugrunde, eine Antennenanordnung, eine Transceiveranordnung und ein Kommunikationssystem zur drahtlosen Inband-Voll-duplex-Übertragung anzugeben, welche hohe Isolationseigenschaften zwischen dem Sender und dem Empfänger innerhalb derselben Transceiveranordnung aufweist und zusätzlich die genannten Nachteile überwindet.

Erfindungsgemäß wird diese Aufgabe durch eine Antennenanordnung mit den Merkmalen des Patentanspruchs 1, durch eine Transceiveranordnung mit den Merkmalen des Patentanspruchs 9 und durch ein Kommunikationssystem mit den Merkmalen des Patentanspruchs 11 gelöst.

Vorteilhafte Erweiterungen der jeweiligen Gegenstände sind in den zugehörigen abhängigen Patentansprüchen aufgeführt.

### Demgemäß ist vorgesehen:

Eine Antennenanordnung für eine Transceiveranordnung aufweisend
- mehrere Antennen,
- welche jeweils ausgebildet sind, eine elektromagnetische Welle abzustrahlen und gleichzeitig eine elektromagnetische Welle zu empfangen,
- wobei die mehreren Antennen jeweils um eine gemeinsame Mittenachse der Antennenanordnung herum angeordnet sind, vorzugsweise entlang eines gemeinsamen gedachten Zylindermantels um die gemeinsame Mittenachse,
- wobei zugehörige Schwerpunkte von jeweils unmittelbar benachbarten Antennen jeweils äquidistant voneinander entfernt angeordnet sind,
- wobei jede Antenne jeweils mit wenigstens einer ersten Signalleitung der Transceiveranordnung und wenigstens einer zweiten Signalleitung der Transceiveranordnung elektrisch und/oder magnetisch verbunden ist,
- wobei in jeder Antenne jeweils die wenigstens eine erste Signalleitung jeweils zur wenigstens einen zweiten Signalleitung orthogonal orientiert ist, vorzugsweise die wenigstens eine erste Signalleitung jeweils tangential und die wenigstens eine zweite Signalleitung jeweils radial zur gemeinsamen Mittenachse orientiert sind,
- wobei die wenigstens eine erste Signalleitung und die wenigstens eine zweite Signalleitung jeweils derart ausgebildet sind, dass
- i. die wenigstens eine erste Signalleitung ein Sendesignal für die abgestrahlte elektromagnetische Welle und die wenigstens eine zweite Signalleitung ein Empfangssignal der empfangenen elektromagnetischen Welle übertragen oder
- ii. die wenigstens eine erste Signalleitung das Empfangssignal und die wenigstens eine zweite Signalleitung das Sendesignal übertragen.

Die der vorliegenden Erfindung zugrunde liegende Erkenntnis/Idee besteht darin, in einer Antennenanordnung mehrere Antennen, welche jeweils ausgebildet sind, eine elektromagnetische Welle abzustrahlen und gleichzeitig eine elektromagnetische Welle zu empfangen, erfindungsgemäß jeweils um eine gemeinsame Mittenachse der Antennenanordnung, vorzugsweise entlang eines gemeinsamen gedachten Zylindermantels um die gemeinsame Mittenachse, herum anzuordnen.

Um das Übersprechen zwischen einer elektromagnetischen Welle, welche von einer Antenne abgestrahlt wird, und einer elektromagnetischen Welle, welche von derselben Antenne empfangen wird, zumindest teilweise, vorzugsweise vollständig zu kompensieren, kann die Polarisation der abgestrahlten elektromagnetischen Welle orthogonal zur Polarisation der empfangenen elektromagnetischen Welle orientiert sein. Die Polarisation ist sowohl sende- als auch empfangsseitig vorzugsweise jeweils linear auszubilden. Somit kann als eine weitere technische Maßnahme in jeder Antenne jeweils die wenigstens eine Signalleitung der Transceiveranordnung, welche jeweils das Sendesignal zur jeweiligen Antenne überträgt, orthogonal zur wenigstens einen Signalleitung der Transceiveranordnung orientiert sein, welche jeweils das Empfangssignal von der jeweiligen Antenne überträgt.

Um das Übersprechen zwischen einer elektromagnetischen Welle, welche von einer Antenne abgestrahlt wird, und den elektromagnetischen Wellen, welche jeweils von den übrigen Antennen der Antennenanordnung empfangen wird, zumindest teilweise, vorzugsweise vollständig zu kompensieren, können schließlich als weitere technische Maßnahme zugehörige Schwerpunkte von jeweils unmittelbar benachbarten Antennen jeweils äquidistant voneinander entfernt angeordnet sein. Auf diese Weise existieren entlang des gemeinsamen gedachten Zylindermantels um die gemeinsame Mittenachse der Antennenanordnung relativ zu jeder Bezugsantenne jeweils Antennen-Paare, deren Antennen jeweils denselben Abstand zur jeweiligen Bezugsantenne aufweisen. Das Übersprechen der in den Antennen eines Antennen-Paares jeweils empfangenen elektromagnetischen Welle auf die in der jeweiligen Bezugsantenne abgestrahlten elektromagnetischen Welle lässt sich somit zumindest teilweise, vorzugsweise vollständig kompensieren. Umgekehrt lässt sich das Übersprechen der in den Antennen eines Antennen-Paares jeweils abgestrahlten elektromagnetischen Welle auf die in der jeweiligen Bezugsantenne empfangenen elektromagnetischen Welle ebenfalls zumindest teilweise, vorzugsweise vollständig kompensieren. Bei einer Antennenanordnung mit einer ungeraden Anzahl von Antennen wird somit das Übersprechen zwischen den einzelnen Antennen bestmöglich kompensiert. Bei einer Antennenanordnung mit einer geraden Anzahl von Antennen ist diejenige Antenne, welche keinem derartigen Antennen-Paar zuordenbar ist, am weitesten von der jeweiligen Bezugsantenne entfernt. Das Ausmaß des Übersprechens einer derartigen Antenne auf die jeweilige Bezugsantenne und somit das Übersprechen in einer derartigen Antennenanordnung lässt sich aufgrund dieser Tatsache aber zumindest teilweise kompensieren.

Die Auswirkung der genannten dritten erfindungsgemäßen technischen Maßnahme auf die Kompensation des Übersprechens behält für jeden fixierten oder veränderlichen Abstand zwischen den Antennenanordnungen der beiden Transceiveranordnungen in axialer und/oder lateraler Richtung sowie für jeden fixierten oder veränderlichen Phasenversatz zwischen den Antennen der beiden Transceiveranordnungen ihre Gültigkeit, da die Polarisation der von allen Antennen der einen Transceiveranordnung jeweils abgestrahlten elektromagnetische Wellen jeweils orthogonal zur Polarisation der von allen Antennen der anderen Transceiveranordnung jeweils abgestrahlten elektromagnetische Wellen orientiert ist. Da das Übersprechen für jeden Phasenversatz zwischen den Antennen der beiden Transceiveranordnungen des Kommunikationssystems in derselben Güte kompensiert wird, liegt vorteilhaft eine rotationsinvariante Kompensation des Übersprechens durch die erfindungsgemäßen Antennenanordnung vor.

Da die Antennen der Antennenanordnung jeweils ausgebildet sind, eine elektromagnetische Welle abzustrahlen und gleichzeitig zu empfangen, d. h. eine sogenannte monostatische Antenne darstellen, und äquidistant entlang eines gemeinsamen gedachten Zylindermantels um die gemeinsame Mittenachse der Antennenanordnung angeordnet sind, lässt sich eine Antennenanordnung, eine Transceiveranordnung und ein Kommunikationssystem mit Druck- und Energie-Leitungen verwirklichen, welche jeweils innerhalb der Antennenanordnung der beiden Transceiveranordnungen vorteilhaft geführt werden können. In einer weiteren vorteilhaften Ausführung einer Antennenanordnung, einer Transceiveranordnung und eines Kommunikationssystems lässt sich eine drahtlose Übertragung mit zwei Übertragungskanälen zwischen den beiden Transceiveranordnungen des Kommunikationssystems verwirklichen, in welchen ein unterschiedliches Übertragungsprotokoll implementiert ist. Im Zentrum der weiteren vorteilhaften Ausführung einer Antennenanordnung ist eine Antennenanordnung mit einem Sendeantennenpaar und einem Empfangsantennenpaar gemäß der EP 4 150 708 B1 für eine schnelle Datenübertragung angeordnet. Um diese Antennenanordnung herum ist vorzugsweise eine erfindungsgemäße Antennenanordnung mit äquidistant entlang eines gemeinsamen gedachten Zylindermantels angeordneten Antennen für eine Datenübertragung mit reduzierter Datenrate gruppiert.

Bei der Antennenanordnung handelt es sich um ein Antennenarray, eine Gruppenantenne oder einen "Gruppenstrahler". Die Antennen der Antennenanordnung sind vorzugsweise jeweils als eine Richtantenne ausgebildet. Unter einer Richtantenne wird hierbei und im Folgenden eine Antenne mit einer Richtwirkung verstanden. Im Fall einer Sendeantenne wird hierbei die gesendete Energie in eine bestimmte Richtung konzentriert, während im Fall einer Empfangsantenne die maximale Empfindlichkeit in einer bestimmten Richtung liegt. Bei den Antennen der zur einer Transceiveranordnung gehörigen Antennenanordnung, welche jeweils eine elektromagnetische Welle abstrahlen und gleichzeitig eine elektromagnetische Welle empfangen, ist jeweils die höchste Sendeleistung und die höchste Empfangsempfindlichkeit vorzugsweise parallel zur Mittenachse der Antennenanordnung in Richtung der Antennenanordnung der anderen Transceiveranordnung gerichtet. Anders ausgedrückt können die Antennen der Antennenanordnung so orientiert sein, dass deren Antennenhauptkeulen jeweils in dieselbe Richtung, nämlich parallel zur Mittenachse der Antennenanordnung in Richtung der Antennenanordnung der anderen Transceiveranordnung, weisen. Die Richtwirkung einer Antenne wird über deren Antennengewinn beschrieben. Dieser wird oft in einem Richtdiagramm in Kugelkoordinaten in Abhängigkeit des Elevationswinkels und des Azimuthwinkels dargestellt. In einem Richtdiagramm ergeben sich dann durch die Abwechslung von Maxima und Minima des Antennengewinns die sogenannten "Antennenkeulen", wobei die Antennenkeule, welche das globale Maximum des Antennengewinns umfasst, als "Antennenhauptkeule" bezeichnet wird.

Im Wesentlichen können alle geometrischen Grundformen von Richtantennen, insbesondere von linear polarisierten Richtantennen, wie planare Antennen, Parabolantennen, Hornantennen, Hohlleiterantennen, Muschelantennen, Dipolantennen etc. zum Einsatz kommen. Vorzugsweise besitzt jede Antenne der Antennenanordnung dieselbe geometrische Antennengrundform und/oder dieselbe mechanische und elektrische Dimensionierung. Auch ist das Material der Antenne und die Position des Ein- und/oder des Ausspeisepunktes der Antenne identisch ausgebildet. Grundsätzlich können die Antennen der Anordnung aber auch einen unterschiedlichen Aufbau, vorzugsweise aber zumindest einen ähnlichen Aufbau aufweisen.

Grundsätzlich kann sich die Erfindung zur Übertragung beliebiger elektromagnetischer Wellen mit beliebigen Wellenlängen bzw. Frequenzen eignen. Besonders vorteilhaft eignet sich die Erfindung allerdings zur Übertragung von hochfrequenten elektromagnetischen Wellen im Frequenzbereich zwischen 20 GHz und 66 GHz, vorzugsweise zwischen 24 GHz und 24,25 GHz (schmalbandige Übertragung im ISM-Band mit 250 MHz Bandbreite) oder alternativ zwischen 57 GHz und 66 GHz (breitbandige Übertragung in einem für Nahfeldübertragung reservierten Band mit 9 GHz Bandbreite). Aufgrund der hohen Trägerfrequenzen kann sich eine hohe Datenübertragungsrate bei der Signalübertragung bei kurzer Reichweite, vorzugsweise im Nahfeldbereich der Antennenanordnung, ergeben, was eine besonders vorteilhafte Eignung der vorgeschlagenen Antennenanordnung für kontaktlose elektrische Verbinder ermöglicht, um herkömmliche elektrische Steckverbindungen zu ersetzen.

Jede Antenne der Antennenanordnung ist, vorzugsweise mit ihrem Schwerpunkt, jeweils entlang eines einzigen gemeinsamen gedachten Zylindermantels um die gemeinsame Mittenachse der Antennenanordnung angeordnet. Insbesondere ist keine Antenne vorzugsweise mit ihrem Schwerpunkt innerhalb des einzigen gemeinsamen gedachten Zylindermantels und ganz besonders ist keine Antenne vorzugsweise mit ihrem Schwerpunkt auf der Mittenachse der Antennenanordnung angeordnet. Die Mittenachse der Antennenanordnung wird nachfolgend auch als eine gemeinsame Drehachse bezeichnet, sofern sich die beiden Transceiveranordnungen des Kommunikationssystems mit ihren zugehörigen Antennenanordnungen relativ zueinander um die gemeinsame Drehachse drehen. Beim Schwerpunkt der Antenne handelt es sich um den Massenmittelpunkt der Antenne. Die äquidistante Beabstandung der Schwerpunkte von jeweils unmittelbar benachbarten Antennen der Antennenanordnung in Kombination mit der Tatsache, dass die Schwerpunkte der Antennen entlang eines einzigen gemeinsamen gedachten Zylindermantels um die gemeinsame Mittenachse der Antennenanordnung angeordnet sind, ergibt einen äquidistanten Phasenwinkel zwischen jeweils unmittelbar benachbarten Antennen der Antennenanordnung für alle Paare von jeweils unmittelbar benachbarten Antennen relativ zur Mittenachse der Antennenanordnung.

Da jede Antenne jeweils gleichzeitig eine elektromagnetische Welle abstrahlt und eine elektromagnetische Welle empfängt, ist jede Antenne jeweils mit wenigstens einer Signalleitung, welche jeweils das Sendesignal für die abzustrahlende elektromagnetische Welle in die Antenne einspeist, und mit wenigstens einer Signalleitung verbunden, welche jeweils das Empfangssignal der empfangenen elektromagnetischen Welle aus der Antenne ausspeist. Da zur Minimierung des Übersprechens die Polarisation der abgestrahlten elektromagnetischen Welle orthogonal zur Polarisation der empfangenen elektromagnetischen Welle orientiert ist, ist die wenigstens eine Signalleitung der Transceiveranordnung, welche jeweils das Sendesignal überträgt, orthogonal zur wenigstens einen Signalleitung der Transceiveranordnung orientiert, welche jeweils das Empfangssignal überträgt.

Somit kann in der Transceiveranordnung eine Gruppe von mit den einzelnen Antennen jeweils verbundenen Signalleitungen, welche hierbei und im Folgenden als erste Signalleitungen bezeichnet werden, orthogonal zu einer anderen Gruppe von mit den einzelnen Antennen jeweils verbundenen Signalleitungen orientiert sein, welche hierbei und im Folgenden als zweite Signalleitungen bezeichnet werden. Im Fall von Antennen einer Antennenanordnung, welche entlang eines gemeinsamen gedachten Zylindermantels um die gemeinsame Mittenachse der Antennenanordnung angeordnet sind, kann somit die Gruppe von mit den einzelnen Antennen jeweils verbundenen ersten Signalleitungen tangential zur Mittenachse der Antennenanordnung orientiert sein. Die andere Gruppe von mit den einzelnen Antennen jeweils verbundenen zweiten Signalleitungen kann radial zur Mittenachse der Antennenanordnung orientiert sein.

In einer ersten Variante der Antennenanordnung übertragen die wenigstens eine erste Signalleitung jeweils das Sendesignal für die von der jeweiligen Antenne abzustrahlende elektromagnetische Welle und die wenigstens eine zweite Signalleitung jeweils das Empfangssignal der von der jeweiligen Antenne empfangenen elektromagnetischen Welle. In einer alternativen zweiten Variante der Antennenanordnung übertragen die wenigstens eine erste Signalleitung jeweils das Empfangssignal der von der jeweiligen Antenne empfangenen elektromagnetischen Welle und die wenigstens eine zweite Signalleitung jeweils das Sendesignal für die von der jeweiligen Antenne abzustrahlende elektromagnetische Welle.

Die Verbindung zwischen der wenigstens einen ersten Signalleitung und der jeweiligen Antenne sowie zwischen der wenigstens einen zweiten Signalleitung und der jeweiligen Antenne erfolgt jeweils elektrisch und/oder magnetisch. Im Fall einer elektrischen Verbindung zwischen der ersten bzw. der zweiten Signalleitung und der jeweiligen Antenne ist eine galvanische Kopplung oder eine kapazitive Kopplung möglich. Im Fall einer magnetischen Verbindung zwischen der ersten bzw. der zweiten Signalleitung und der jeweiligen Antenne ist eine induktive Kopplung mittels beispielsweise eines Übertragers verwirklicht. Eine elektrische und magnetische Verbindung zwischen der ersten bzw. der zweiten Signalleitung und der jeweiligen Antenne kann über eine elektromagnetische Nahfeldkopplung erfolgen. Dies kann eine Ein- und Auskopplung über eine Zwischenantenne oder eine gestapelte Anordnung von Zwischenantennen sein, welche jeweils in einer zugehörigen Ebene zwischen der Antenne und einer Masseebene der elektrischen Leiterplatte angeordnet sein kann.

Jede Antenne der Antennenanordnung kann jeweils mit wenigstens einer ersten Signalleitung und wenigstens einer zweiten Signalleitung verbunden sein. Eine einzige erste Signalleitung oder eine einzige zweite Signalleitung kann jeweils ein asymmetrisches Signal übertragen, welches auch als ein single-ended Signal bezeichnet wird. Signalleitungen eines Paares von ersten Signalleitungen bzw. eines Paares von zweiten Signalleitungen können jeweils an gegenüberliegenden Seiten der jeweiligen Antenne angeordnet sein und jeweils ein symmetrisches bzw. differentielles Signal übertragen.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Eine asymmetrische Einspeisung eines Sendesignals bzw. eine asymmetrische Ausspeisung eines Empfangssignal kann aufgrund von Geometrie- und/oder Materialtoleranzen der Antenne bzw. des Ein- bzw. Ausspeisepunktes relativ zur Antenne eine Verschiebung von einer linearen Polarisation in eine geringfügige Kreuzpolarisation der elektromagnetischen Welle bewirken. Um das dadurch verursachte Übersprechen zwischen den Signalleitungen zu minimieren bzw. zu beseitigen, kann in einer vorzugsweisen Ausprägung der Erfindung die Ein- und Ausspeisung zwischen der jeweiligen Antenne und den zugehörigen ersten Signalleitungen jeweils symmetrisch bzw. differentiell sein. Die beiden ersten Signalleitungen übertragen somit ein symmetrisches bzw. differentielles Signal.

Gegenüber einer asymmetrischen Ein- oder Ausspeisung kann eine symmetrische Ein- oder Ausspeisung die Polarisation der elektromagnetischen Welle in Richtung einer gedachten Verbindungslinie zwischen den beiden Einspeisepunkten bzw. zwischen den beiden Ausspeisepunkten ausrichten und somit die Ausbildung einer linear polarisierten elektromagnetischen Welle begünstigen. Zudem ist aufgrund des gleichmäßigen Übersprechens in Betrag und Phase auf die differentiellen Signalleitungen ein zusätzlicher Isolationsmechanismus gegeben.

In einer vorzugsweisen Ausprägung der Erfindung kann außerdem in jeder Antenne eines jeden Paares von jeweils unmittelbar benachbarten Antennen jeweils ein Ein- oder Ausspeisepunkt für das zugehörige symmetrische Signal ausgebildet sein, welche innerhalb des jeweiligen Paares zueinander nächst benachbart angeordnet sind und an welchen jeweils ein elektrisches Potential des zugehörigen symmetrischen Signals anliegt, deren Phasen zueinander gegenphasig sind.

Insbesondere kann die einzelne Transceiveranordnung derart ausgebildet sein, dass sich zu den symmetrischen Einspeisepunkten von jeweils unmittelbar benachbarten Antennen jeweils Sendesignale einspeisen lassen, deren elektrische Potentiale die obig genannte Phasenbeziehung bzw. Polaritäten aufweisen.

Insbesondere im Fall von ersten Signalleitungen, welche tangential zur Mittenachse der Antennenanordnung orientiert sind, bedingt eine derartige Polarität der elektrische Potentiale an den Ein- oder Ausspeisepunkten zwischen den einzelnen Antennen und den zugehörigen ersten Signalleitungen, dass sich relativ zu jeder Bezugsantenne der Antennenanordnung jeweils das Übersprechen der elektrischen Potentiale an den Ein- oder Ausspeisepunkten der übrigen Antennen auf die jeweilige Bezugsantenne gegenseitig kompensieren lässt (mit Ausnahme einer evtl. vorhandenen Antenne mit einem maximalen Abstand zur Bezugsantenne, dessen Übersprechen sich mit dem Übersprechen keiner weiteren Antenne der Antennenanordnung kompensieren lässt).

Auf diese Weise lässt sich in einer ersten Variante der Antennenanordnung das Übersprechen der Sendesignale von den Einspeisepunkte der ersten Signalleitungen in die einzelnen zugehörigen Antennen zu den Empfangssignalen an den Ausspeisepunkten der übrigen Antennen zu den zugehörigen zweiten Signalleitungen und umgekehrt kompensieren. Analog lässt sich in einer zweiten Variante der Antennenanordnung das Übersprechen der Empfangssignale an den Ausspeisepunkten der einzelnen Antennen in die zugehörigen ersten Signalleitungen zu den Sendesignalen an den Einspeisepunkten der zweiten Signalleitungen zu den übrigen Antennen und umgekehrt kompensieren.

In einer besonders vorzugsweisen Ausprägung der Erfindung kann jede Antenne mit jeweils einer einzigen zweiten Signalleitung der Transceiveranordnung verbunden sein, welche bevorzugt relativ zur Mittenachse der Antennenanordnung radial ausgerichtet sein kann und entweder relativ zur jeweiligen Antenne radial innenseitig oder relativ zur jeweiligen Antenne radial außenseitig angeordnet sein kann. Die einzige zweite Signalleitung ist mit einem asymmetrischen Signal, d. h. einem single-ended Signal, gespeist.

Ein Übersprechen von Sende- oder Empfangssignalen, welche an den Ein- bzw. Ausspeisepunkten von symmetrischen und tangential orientierten ersten Signalleitungen in die zugehörigen Antennen eingespeist bzw. aus den zugehörigen Antennen ausgespeist werden, auf Ein- oder Ausspeisepunkte von symmetrisch und radial gerichteten zweiten Signalleitungen lässt sich nicht vollständig kompensieren, da die Abstände von den Ein- und Ausspeisepunkten der tangential gerichteten ersten Signalleitungen zu den radial außenseitigen Ein- bzw. Ausspeisepunkten unterschiedlich groß zu den Abständen von den Ein- und Ausspeisepunkten der tangential gerichteten ersten Signalleitungen zu den radial innenseitigen Ein- bzw. Ausspeisepunkten sind.

Vorzugsweise kann die wenigstens eine zweite Signalleitung, vorzugsweise die einzige zweite Signalleitung, jeweils zum Schwerpunkt der jeweiligen Antenne gerichtet sein. Der Ein- und Ausspeisepfad des in der wenigstens einen zweiten Signalleitung jeweils übertragenen Signals, welcher somit sowohl radial zum Mittelpunkt der Antennenanordnung als auch radial zum Schwerpunkt der jeweiligen Antenne orientiert sein kann, bildet eine Symmetrieachse für die Ein- und Ausspeisung des in den beiden ersten Signalleitungen übertragenen Signals. Die Symmetrie relativ zum radialen Ein- bzw. Ausspeisepfad einer jeweiligen Bezugsantenne gilt aufgrund der äquidistanten Abstände zwischen den einzelnen Antennen auch für die Ein- und Ausspeisung der in den übrigen Antennen jeweils tangential ein- bzw. ausgespeisten Signale. Eine derartige vorzugsweise Ausbildung der einzelnen Antennen bewirkt somit eine bestmögliche Kompensation des Übersprechens zwischen der in derselben Antenne abgestrahlten und empfangenen elektromagnetischen Welle als auch zwischen den in unterschiedlichen Antennen jeweils abgestrahlten und empfangenen elektromagnetischen Wellen.

Für jede Antenne kann die zugehörige wenigstens eine erste Signalleitung, oder können die zugehörigen vorzugsweise beiden ersten Signalleitungen, vorteilhaft jeweils zum Schwerpunkt der jeweiligen Antenne gerichtet sein. Denkbar ist aber auch eine Ein- und Ausspeisung des in der wenigstens einen ersten Signalleitung übertragenen Signals mit einem zum Schwerpunkt der jeweiligen Antenne versetzten Ein- und Ausspeisepfad. Eine derartige zum Schwerpunkt der Antenne asymmetrische Ein- und Ausspeisung muss die Kompensation des Übersprechens nicht verschlechtern. Eine Kompensation des Übersprechens kann aber verbessert werden, indem die ersten Signalleitungen jeder Antenne vorzugsweise jeweils in einem gleichen radialen Abstand zum Mittelpunkt der Antennenanordnung angeordnet sind.

Der Ein- und Ausspeisepunkt der wenigsten einen ersten Signalleitung und der wenigstens einen zweiten Signalleitung kann vorzugsweise außermittig innerhalb des Querschnittsrands der einzelnen Antenne ausgebildet sein. Denkbar ist aber auch eine Ein- und Ausspeisung der wenigsten einen ersten Signalleitung und der wenigstens einen zweiten Signalleitung jeweils am Querschnittsrand oder geringfügig außerhalb des Querschnittsrandes der einzelnen Antenne. Eine Verschiebung der Eingangsimpedanz am Ein- bzw. Ausspeisepunkt im ersten und dritten Fall gegenüber dem zweiten Fall kann durch eine entsprechende Anpassung in einem Anpassungsnetzwerk kompensiert werden.

In einer weiteren vorzugsweisen Ausprägung der Erfindung können die Antennen jeweils dieselbe Querschnittsgeometrie und/oder dieselbe Querschnittsfläche in einer zur Mittenachse der Antennenanordnung orthogonalen Richtung aufweisen, um Antennen mit derselben Resonanzfrequenz zu verwirklichen.

Zusätzlich kann für jede Antenne jeweils eine maximale Erstreckung in einer zur Mittenachse der Antennenanordnung radialen Richtung und in einer zur Mittenachse der Antennenanordnung tangentialen Richtung vorzugsweise gleich groß sein. Somit entspricht in jeder Antenne jeweils die Resonanzfrequenz der elektromagnetischen Welle, welche von der wenigstens einen tangential verlaufenden ersten Signalleitung ein- oder ausgespeist wird, der Resonanzfrequenz der elektromagnetischen Welle, welche von der wenigstens einen radial verlaufenden zweiten Signalleitung ein- oder ausgespeist wird. Auf diese Weise ist die Übertragung zwischen den beiden Transceiveranordnungen in beiden Übertragungsrichtungen vorteilhaft angeglichen.

Eine Antenne mit einem runden Querschnitt erfüllt aufgrund der Rotationssymmetrie zu ihrem Schwerpunkt diese technische Anforderung am besten. Eine quadratische oder eine polygonale Antenne mit jeweils einer gleich langen Symmetrieachse in einer radialen und in einer tangentialen Richtung zum Mittelpunkt der Antennenanordnung können alternativ zum Einsatz kommen.

In einer weiteren vorzugsweisen Ausprägung der Erfindung kann jede Antenne jeweils als eine planare Antenne ausgebildet sein. Unter einer "planaren" Antenne ist hierbei und im Folgenden eine Antenne mit einer vornehmlich flachen und einer vorzugsweise ebenen Ausprägung zu verstehen, die insbesondere zwei voneinander abgewandte, vorzugsweise parallel verlaufende Hauptflächen aufweist, also beispielsweise in der Art einer Scheibe, einer Beschichtung oder eines Plättchens. Insbesondere kann es sich bei einer planaren Antenne um eine Patchantenne oder um eine Schlitzantenne handeln. Die planaren Antennen der Antennenanordnung können jeweils vorzugsweise auf einer Seitenfläche einer elektrischen Leiterplatte oder auf einer zur Seitenfläche parallelen Ebene der elektrischen Leiterplatte, angeordnet sein. Denkbar ist auch eine von der elektrischen Leiterplatte beabstandet angeordnete planare Antenne, welche an der elektrischen Leiterplatte fixiert ist.

Die elektrische Leiterplatte ist vorzugsweise aus dem Verbundwerkstoff FR-4 (Verbundwerkstoff aus Glasfasern in Epoxidharz) oder aus einem Verbund von Keramikpartikeln (Teflon) in Epoxidharz hergestellt und ermöglicht somit eine kostengünstige Realisierung der Antennenanordnung. Denkbar ist auch eine Implementierung, in der die planaren Antennen der Antennenanordnung direkt am Substrat einer integrierten Schaltung integriert sind und somit sehr dicht an den weiteren technischen Funktionseinheiten der Transceiveranordnung (Sende- und Empfangseinheit, Symmetrierglied usw.) gepackt sind.

Die wenigstens eine erste Signalleitung und/oder die wenigstens eine zweite Signalleitung können jeweils als eine Streifenleitung ausgebildet sein und auf derselben Seitenfläche oder in der derselben Ebene der elektrischen Leiterplatte wie die zugehörige planare Antenne angeordnet sein. Alternativ kann die wenigstens eine erste Signalleitung und/oder die wenigstens eine zweite Signalleitung jeweils auf einer unterschiedlichen Seitenfläche bzw. Ebene der elektrischen Leiterplatte als die planare Antenne ausgebildet sein. Die Verbindung kann hierbei galvanisch über jeweils eine Durchkontaktierung ("Via") oder kapazitiv, induktiv oder elektromagnetisch erfolgen.

Besonders bevorzugt kann jede planare Antenne der Antennenanordnung auf derselben Seitenfläche oder in derselben, zur Seitenfläche parallelen Ebene der elektrischen Leiterplatte bzw. der integrierten Schaltung angeordnet sein. Die planaren Antennen können vorzugsweise entlang eines gemeinsamen gedachten Kreisumfanges auf einer Seitenfläche oder auf einer dazu parallelen Ebene der elektrischen Leiterplatte bzw. der integrierten Schaltung angeordnet sein. Der gemeinsame gedachte Kreisumfang ist auf dem obig erwähnten Zylindermantel relativ zu einem Mittelpunkt oder einem Drehzentrum der Antennenanordnung angeordnet, welcher sich im Schnittpunkt der gemeinsamen Mittenachse der Antennenanordnung mit der Seitenfläche oder der dazu parallelen Ebene der elektrischen Leiterplatte bzw. der integrierten Schaltung befindet. Durch eine derartige besonders vorzugsweise Ausprägung der Erfindung wird das Übersprechen zwischen den einzelnen Antennen der Antennenanordnung jeweils vereinheitlicht und damit die Kompensation des Übersprechens zusätzlich optimiert. Die Abstände von jeweils unmittelbar benachbarten planaren Antennen, welche entlang einer Kreislinie auf einer Seitenfläche oder einer dazu parallelen Ebene der elektrischen Leiterplatte bzw. der integrierten Schaltung angeordnet sein können, können vorzugsweise auch äquidistant ausgebildet sein, um ein Kompensieren des Übersprechens zumindest teilweise und vorzugsweise vollständig zu bewirken.

Um eine Mindestkompensation des Übersprechens zwischen den Antennen der Antennenanordnung zu erzielen, kann die Antennenanordnung mindestens drei Antennen aufweisen. Wie bereits obig im Detail erläutert wurde, bewirkt eine ungerade Anzahl von Antennen gegenüber einer geraden Anzahl von Antennen in der Antennenanordnung eine bessere Kompensation des Übersprechens. In der Antennenanordnung bewirkt eine höhere Anzahl von Antennen, d. h. eine feinere Rasterung der Antennen in der Antennenanordnung, gegenüber einer geringeren Anzahl von Antennen eine bessere Übertragungsqualität, da sich die Empfangsantennen jeweils stets innerhalb der Hauptkeule einer gegenüberliegenden Sendeantenne befinden können. Die Anzahl der in einer Antennenanordnung realisierten Antennen hängt aber letztendlich stark von der Applikation, d. h. vom verfügbaren Bauraum, von der erforderlichen Übertragungsqualität und vom Realisierungsbudget, ab. Somit kann eine Antennenanordnung vorzugsweise mindestens fünf Antennen und besonders vorzugsweise mindestens sieben Antennen aufweisen. Eine Berührung der einzelnen Antennen innerhalb der Antennenanordnung ist ausgeschlossen.

In einer vorzugsweisen Weiterbildung der Erfindung kann eine Einspeisung des Sendesignals in jede Antenne jeweils von der zugehörigen wenigstens einen ersten Signalleitung (d. h. in einer ersten Variante der Antennenanordnung) oder von der zugehörigen wenigstens einen zweiten Signalleitung (d. h. in einer zweiten Variante der Antennenanordnung) jeweils gleichphasig erfolgen. Gleichphasige Einspeisung bedeutet hierbei und im Folgenden, dass die elektrischen Potentiale der Sendesignale, welche jeweils als ein Wechselsignal, vorzugsweise jeweils als ein hochfrequentes Wechselsignal, ausgebildet sind, jeweils am Einspeisepunkt der wenigstens einen ersten Signalleitung bzw. der wenigstens einen zweiten Signalleitung in die zugehörige Antenne jeweils die gleiche Phase aufweisen. Die in alle Antennen jeweils eingespeisten Sendesignale sind hierbei identisch und weisen somit denselben Träger und dasselbe Modulationssignal auf.

Eine derartige phasengleiche Einspeisung eines identischen Sendesignals in jede Antenne der Antennenanordnung ermöglicht vorteilhaft ein Abstrahlen von phasengleichen elektromagnetischen Wellen entlang der gesamten ringförmigen Abstrahlebene der Antennenanordnung. Die in den Antennen der gegenüberliegenden Antennenanordnung bzw. Transceiveranordnung jeweils empfangene elektromagnetische Welle erfährt hierdurch einzig eine Phasenverschiebung durch die Phasenverzerrung im Übertragungskanal, welche aufgrund der Rotationssymmetrie des Übertragungskanals auch rotationswinkelunabhängig ist. Somit lässt sich die Entzerrung in der empfangenden Transceiveranordnung vorteilhaft vereinfachen bzw. die Entzerrungsqualität vorteilhaft verbessern.

Eine zusätzliche Verbesserung der Entzerrung lässt sich dadurch erzielen, dass die Einspeisung des Sendesignals in jede Antenne jeweils von der zugehörigen wenigstens einen ersten Signalleitung oder von der zugehörigen wenigstens einen zweiten Signalleitung vorzugsweise jeweils gleichphasig und jeweils mit einer gleichen Amplitude erfolgt.

Von der Erfindung ist ferner eine Transceiveranordnung mit abgedeckt, welche eine erfindungsgemäße Antennenanordnung, eine Sendeeinheit, eine Empfangseinheit, eine Einheit zum Signalverzweigen und eine Einheit zum Signalkombinieren aufweist.

Ein Ausgangsanschluss der Sendeeinheit ist hierbei mit einem Eingangsanschluss der Einheit zum Signalverzweigen und ein Ausgangsanschluss der Einheit zum Signalkombinieren ist mit einem Eingangsanschluss der Empfangseinheit verbunden.

Außerdem sind in der ersten Variante der Antennenanordnung die Ausganganschlüsse der Einheit zum Signalverzweigen jeweils mit der wenigstens einen ersten Signalleitung der zugehörigen Antenne und die zweiten Signalleitungen jeder Antenne jeweils mit einem zugehörigen Eingangsanschluss der Einheit zum Signalkombinieren verbunden. In der zweiten Variante der Antennenanordnung sind die Ausgangsanschlüsse der Einheit zum Signalverzweigen jeweils mit der wenigstens einen zweiten Signalleitung der zugehörigen Antenne und die ersten Signalleitungen jeder Antenne jeweils mit dem zugehörigen Eingangsanschluss der Einheit zum Signalkombinieren verbunden.

Die bisher und im Folgenden zur Antennenanordnung jeweils erwähnten technischen Merkmale, technischen Wirkungen und technischen Vorteile gelten äquivalent bei der Transceiveranordnung und umgekehrt.

Auf vorteilhafte Weise kann eine Transceiveranordnung mit einer Antennenanordnung geschaffen werden, welche sich für eine gleichzeitige bidirektionale Datenübertragung (Vollduplex) im gleichen Frequenzband (Inband-Vollduplex) eignet. Außerdem kann unabhängig von einer gegenseitigen Rotation bzw. einer gegenseitigen rotatorischen Ausrichtung der zu den beiden Transceiveranordnungen jeweils gehörigen Antennenanordnungen ein Übersprechen zwischen dem Sende- und dem Empfangskanal bestmöglich bei gleichzeitig einfachem und somit kostenminimiertem technischem Aufbau der Antennenanordnung kompensiert werden.

Die Verbindung zwischen den einzelnen Einheiten kann hierbei jeweils unmittelbar oder, wie noch erläutert wird, mittelbar mittels Zwischenschaltens wenigstens einer weiteren Einheit erfolgen. Die Verbindung erfolgt hierbei vorzugsweise elektrisch über eine zugehörige elektrische Signalleitung, beispielsweise über eine für HF-Anwendungen geeignete Streifenleitung. In einer weniger vorzugsweisen Ausprägung kann die Verbindung zwischen den einzelnen Einheiten auch magnetisch über beispielsweise einen Übertrager oder über eine elektromagnetische Nahfeldkopplung erfolgen.

Die Sendeeinheit ist ausgebildet, ein Sendesignal, vorzugsweise ein hochfrequentes Sendesignal, zu erzeugen.

Die Einheit zum Signalverzweigen, an dessen Eingangsanschluss das von der Sendeeinheit empfangene Sendesignal anliegt, ist ausgebildet, das am Eingangsanschluss anliegende hochfrequente Sendesignal in eine der Anzahl von Antennen der Antennenanordnung entsprechende Anzahl von Sendesignalen an jeweils einem Ausgangsanschluss zu teilen. Die an den Ausgangsanschlüssen jeweils anliegenden Sendesignale sind vorzugsweise identisch und jeweils hinsichtlich ihres Signalpegels zumindest um den Teilungsfaktor der Einheit zum Signalverzweigen (= Anzahl der Ausgangsanschlüsse) gegenüber dem Signalpegel des Sendesignals am Eingangsanschluss reduziert. Die Einheit zum Signalverzweigen (englisch: splitter) kann vorzugsweise als ein Hochfrequenz-Leistungsteiler, auch als 0°-Koppler bezeichnet, in den Ausprägungen eines resistiven Leistungsteilers, eines reaktiven Leistungsteilers - auch Wilkinson-Leistungsteiler oder Lambda-Viertel-Leistungsteiler genannt - oder eines hybriden Leistungsteilers ausgebildet sein. Die Einheit zum Signalverzweigen kann auch als ein aktiver Leistungsteiler verwirklicht sein, welcher vorzugsweise in einer integrierten Schaltung implementiert ist. In einer weniger vorzugsweisen Ausprägung kann die Einheit zum Signalverzweigen auch als ein resistiver Signalteiler ausgebildet sein. Im Fall eines Wilkinson-Leistungsteilers kann aufgrund der phasengleichen Sendesignale an den einzelnen Ausgangsanschlüssen auf einen üblicherweise verwendeten Ausgangswiderstand zwischen den beiden Ausgangsanschlüssen jeder finalen Teilerstufe verzichtet werden.

Im Sendesignalpfad wird das von der Sendeeinheit erzeugte Sendesignal über die Einheit zum Signalverteilen vervielfacht. Die vervielfachten und identischen Sendesignale werden über die jeweiligen Signalleitungen (erste Signalleitungen in der ersten Variante der Antennenanordnung und zweite Signalleitungen in der zweiten Variante der Antennenanordnung) den einzelnen Antennen zugeführt.

Im Empfangssignalpfad werden die in die jeweiligen Signalleitungen der einzelnen Antennen (zweite Signalleitungen in der ersten Variante der Antennenanordnung und erste Signalleitungen in der zweiten Variante der Antennenanordnung) ausgespeisten Empfangssignale in der Einheit zum Signalkombinieren zusammengeführt und der Empfangseinheit zugeführt.

Die Einheit zum Signalkombinieren kann nach denselben obig genannten technischen Prinzipien wie die Einheit zum Signalverteilen verwirklicht sein. Einzig ist die Einheit zum Signalkombinieren in umgekehrter Signalflussrichtung zur Einheit zum Signalverteilen verschaltet. Die Empfangseinheit ist ausgebildet, die im Empfangssignal übertragenen Informationen in üblichen Signalverarbeitungsstufen (Verstärken, Filtern, Entzerren, Demodulieren usw.) zu gewinnen.

In einer ersten Variante einer vorzugsweisen Weiterbildung einer Transceiveranordnung, welche hierbei und im Folgenden als erste Transceiveranordnung bezeichnet wird, können die Ausgangsanschlüsse der Einheit zum Signalverzweigen jeweils mit einem asymmetrischen Anschluss eines zur jeweiligen Antenne gehörigen Symmetriergliedes verbunden sein, welches hierbei und im Folgenden jeweils als ein erstes Symmetrierglied bezeichnet wird. Die symmetrischen Anschlüsse des ersten Symmetrierglieds können mit einem Paar von ersten Signalleitungen der jeweiligen Antenne verbunden sein.

In einer zweiten Variante einer vorzugsweisen Weiterbildung einer Transceiveranordnung, welche hierbei und im Folgenden als zweite Transceiveranordnung bezeichnet wird, kann ein Paar von ersten Signalleitungen jeder Antenne jeweils mit symmetrischen Anschlüssen eines zur jeweiligen Antenne gehörigen weiteren Symmetriergliedes verbunden sein, welches hierbei und im Folgenden jeweils als ein zweites Symmetrierglied bezeichnet wird. Der asymmetrische Anschluss jedes zweiten Symmetriergliedes kann mit dem zugehörigen Eingangsanschluss der Einheit zum Signalkombinieren verbunden sein.

Unter einem symmetrischen Anschluss wird hierbei und im Folgenden ein Anschluss einer symmetrischen bzw. differentiellen Signalübertragung verstanden. Unter einem asymmetrischen Anschluss wird hierbei und im Folgenden ein Anschluss zur asymmetrischen bzw. single-ended Signalübertragung verstanden.

In einem erfindungsgemäßen Kommunikationssystem ist die Transceiveranordnung des einen Kommunikationspartners als erste Transceiveranordnung und die Transceiveranordnung des anderen Kommunikationspartners als zwei Transceiveranordnung ausgebildet. Das einzelne erste Symmetrierglied der ersten Transceiveranordnung ist jeweils ausgebildet, ein asymmetrisches Sendesignal in ein symmetrisches Sendesignal zur Einspeisung eines differentiellen Sendesignals in die einzelne Antenne zu wandeln. Das einzelne zweite Symmetrierglied der zweiten Transceiveranordnung ist jeweils ausgebildet, ein von einer einzelnen Antenne jeweils differentiell bzw. symmetrisch ausgespeistes Empfangssignal in ein asymmetrisches Empfangssignal zu wandeln.

Das erste bzw. das zweite Symmetrierglied kann vorzugsweise als ein 180°-Koppler, auch als Hybridkoppler oder Rat-Race-Koppler bezeichnet, ausgebildet sein. Daneben kann als erstes bzw. zweites Symmetrierglied in einer weniger vorzugsweisen Ausbildung jeweils ein Balun, vorzugsweise ein Marchand-Balun oder ein Balun in der Ausprägung eines Spartransformators, zum Einsatz kommen.

Die symmetrischen Anschlüsse der einzelnen ersten bzw. zweiten Symmetrierglieder sind jeweils mit den zugehörigen Paaren von ersten Signalleitungen der einzelnen Antennen derart verschaltet, dass die elektrischen Potentiale von zwei symmetrischen Signalen, welche an den beiden nächst benachbarten Ein- oder Ausspeisepunkten eines Paares von unmittelbar benachbarten Antennen anliegen, gegenphasig sind bzw. eine unterschiedliche Polarität aufweisen.

In einer alternativen Ausprägung der ersten Transceiveranordnung kann der asymmetrische Anschluss eines ersten Symmetriergliedes mit dem Ausganganschluss der Sendeeinheit verbunden sein. Die beiden symmetrischen Anschlüsse des ersten Symmetriergliedes können jeweils mit dem Eingangsanschluss von zwei Einheiten zum Signalverzweigen verbunden sein. Jeweils ein Ausgangsanschluss der beiden Einheiten zum Signalverzweigen kann mit einer zugehörigen ersten Signalleitung eines Paares von ersten Signalleitungen zur Einspeisung eines differentiellen Sendesignals in eine zugehörige Antenne verbunden sein. Äquivalent können in einer alternativen Ausprägung der zweiten Transceiveranordnung die mit einer jeweiligen Antenne verbundenen ersten Signalleitungen eines Paares von ersten Signalleitungen zur Ausspeisung eines differentiellen Empfangssignals mit einem zugehörigen Eingangsanschluss von zwei Einheiten zum Signalkombinieren verbunden sein. Die Ausganganschlüsse der beiden Einheiten zum Signalkombinieren können mit den symmetrischen Eingangsanschlüssen eines zweiten Symmetriergliedes verbunden sein, dessen Ausgangsanschluss mit dem Eingangsanschluss der Empfangseinheit verbunden sein kann.

Von der Erfindung ist schließlich ein Kommunikationssystem mit abgedeckt, welches eine erste Transceiveranordnung und eine zweite Transceiveranordnung zur Bereitstellung einer drahtlosen Inband-Vollduplex-Übertragung zwischen den Transceiveranordnungen aufweist.

Die erste Transceiveranordnung ist ausgebildet, eine zu einem ersten Sendesignal gehörige erste elektromagnetische Welle abzustrahlen. Die zweite Transceiveranordnung ist ausgebildet, die von der ersten Transceiveranordnung abgestrahlte erste elektromagnetische Welle zu empfangen und in ein zugehöriges erstes Empfangssignal überzuführen. Zusätzlich ist die zweite Transceiveranordnung ausgebildet, eine zu einem zweiten Sendesignal gehörige zweite elektromagnetische Welle abstrahlen. Die erste Transceiveranordnung ist zusätzlich ausgebildet, die von der zweiten Transceiveranordnung abgestrahlte zweite elektromagnetische Welle zu empfangen und in ein zugehöriges zweites Empfangssignal überzuführen.

Die erste und die zweite Transceiveranordnung sind jeweils wie obig beschrieben ausgebildet. Darüber hinaus gelten die bisher und im Folgenden zur Antennenanordnung und zur Transceiveranordnung jeweils erwähnten technischen Merkmale, technischen Wirkungen und technischen Vorteile äquivalent beim Kommunikationssystem und umgekehrt.

Auf vorteilhafte Weise kann ein kostengünstiges und bauraumminimiertes Inband-Vollduplex-Kommunikationssystem zur drahtlosen Datenübertragung zwischen den Kommunikationspartnern mit einer optimierten Kompensation des Übersprechens zwischen dem Sende- und dem Empfangskanal bereitgestellt werden. Das Kommunikationssystem ist einerseits bei zueinander fixiert positionierten Kommunikationspartnern einsetzbar. Das Kommunikationssystem entfaltet seine Übertragungsqualität andererseits vor allem bei zueinander bewegbaren, insbesondere rotatorisch zueinander bewegbaren elektrischen Einrichtungen bzw. bei elektrischen Einrichtungen mit einem festen, aber unbekannten Phasenversatz zwischen den Antennen der zu den beiden Transceiveranordnungen jeweils gehörigen Antennenanordnungen. Das erfindungsgemäße Kommunikationssystem kann insbesondere als Schleifring- oder Verkabelungsersatz bei rotierenden Motoren, Generatoren, Maschinen, Automaten oder Robotern beispielsweise in den Sektoren Automobil, Industrie, Energieerzeugung und Medizintechnik zum Einsatz kommen.

In einer vorzugsweisen Ausprägung des Kommunikationssystems können die beiden Transceiveranordnungen relativ zueinander um eine gemeinsame Drehachse drehbar sein. Die gemeinsame Drehachse kann hierbei mit den Mittenachsen der zu den beiden Transceiveranordnungen jeweils gehörigen Antennenanordnung zusammenfallen. Der gemeinsame Mittelpunkt jeder aus jeweils planaren Antennen zusammengesetzten Antennenanordnung befindet sich somit jeweils auf der gemeinsamen Drehachse.

Neben einer rotatorischen Relativbewegung kann auch eine translatorische Relativbewegung, insbesondere in Richtung der gemeinsamen Drehachse, zwischen den beiden Kommunikationspartnern vorgesehen sein.

In einer weiteren vorzugsweisen Ausprägung des Kommunikationssystems kann der Zylindermantel, entlang welchem jede Antenne der ersten Transceiveranordnung jeweils angeordnet ist, zum Zylindermantel fluchten, entlang welcher jede Antenne der zweiten Transceiveranordnung jeweils angeordnet ist. Im Fall von Antennenanordnungen mit jeweils planaren Antennen können die zugehörigen Kreislinien der beiden Antennenanordnungen, entlang welchen die Mittelpunkte der einzelnen planaren Antennen angeordnet sind, zueinander koaxial angeordnet sein und können jeweils den gleichen Durchmesser aufweisen. Somit können die ringförmigen Bereiche, in welchen die Antennen der beiden Transceiveranordnung jeweils angeordnet sind, zueinander fluchten. Bei einer Hauptabstrahlkeule jeder Antenne in den beiden Transceiveranordnungen, welche jeweils parallel zur Orientierung der gemeinsamen Drehachse gerichtet ist, lassen sich somit die abstrahlenden Antennen der einen Transceiveranordnung zu den empfangenden Antennen der anderen Transceiveranordnung bestmöglich zueinander ausrichten.

In einer vorteilhaften Weiterbildung des Kommunikationssystems können die ersten Signalleitungen in der ersten Transceiveranordnung jeweils ausgebildet sein, das erste Sendesignal zu übertragen, und die ersten Signalleitungen in der zweiten Transceiveranordnung können konsequenterweise jeweils ausgebildet sein, das zugehörige erste Empfangssignal zu übertragen. Somit weisen die von jeder sendenden Antenne der ersten Transceiveranordnung jeweils abgestrahlten elektromagnetischen Wellen jeweils eine zur gemeinsamen Drehachse tangential orientierte Polarisation auf.

Aufgrund der tangentialen Orientierung der ersten Signalleitungen jeder empfangenden Antenne in der zweiten Transceiveranordnung weisen die empfangenden Antennen jeweils eine maximale Empfangsempfindlichkeit in der zur gemeinsamen Drehachse tangentialen Richtung auf und können somit die von der ersten Transceiveranordnung jeweils abgestrahlten elektromagnetischen Wellen mit jeweils einer tangential orientierten Polarisation bestmöglich empfangen. Die sendenden Antennen der ersten Transceiveranordnung weisen somit dieselbe Symmetrie wie die empfangenden Antennen der zweiten Transceiveranordnung auf.

Äquivalent können die zweiten Signalleitungen in der zweiten Transceiveranordnung jeweils ausgebildet sein, das zweite Sendesignal zu übertragen und die zweiten Signalleitungen in der ersten Transceiveranordnung können konsequenterweise jeweils ausgebildet sein, das zugehörige zweite Empfangssignal zu übertragen. Die von jeder sendenden Antenne der zweiten Transceiveranordnung jeweils abgestrahlte elektromagnetische Welle weist jeweils eine zur gemeinsamen Drehachse radial orientierte Polarisation auf. Die von jeder sendenden Antenne der zweiten Transceiveranordnung jeweils abgestrahlte elektromagnetische Welle wird bestmöglich von jeder empfangenden Antenne der ersten Transceiveranordnung empfangen, da deren maximale Empfangsempfindlichkeit jeweils aufgrund der radialen Orientierung der wenigstens einen zweiten Signalleitung jeder empfangenden Antenne radial zur gemeinsamen Drehachse ausgerichtet ist. Die sendenden Antennen der zweiten Transceiveranordnung weisen somit ebenfalls dieselbe Symmetrie wie die empfangenden Antennen der ersten Transceiveranordnung auf.

Die erste Transceiveranordnung und die zweite Transceiveranordnung können vorzugsweise im Nahfeldbereich der zugehörigen Antennenanordnungen zueinander angeordnet sein. Das erfindungsgemäße Kommunikationssystem weist insbesondere im Nahfeldbereich ein zur gemeinsamen Drehachse bzw. zu den Mittenachsen der beiden Antennenanordnungen jeweils rotationssymmetrisch ausgebildetes elektrisches Feld auf und eignet sich somit insbesondere für eine rotationsinvariante Datenübertragung zwischen zwei Kommunikationspartnern.

Unter Nahfeldbereich wird hierbei und im Folgenden ein axialer Abstand zwischen den beiden Transceiveranordnungen in der Größenordnung von bis zu drei Wellenlängen, vorzugsweise von bis zu zwei Wellenlängen, des zu übertragenden Signals verstanden. Bei einem geeigneten Übertragungsfrequenzbereich der drahtlosen Inband-Vollduplex-übertragung des erfindungsgemäßen Kommunikationssystems zwischen 20 GHz und 66 GHz liegt der vorzugsweise Nahfeldbereich bei einem axialen Abstand der beiden Transceiveranordnungen zwischen 1,5 mm und 5 mm. Denkbar ist aber auch eine drahtlose Inband-Vollduplex-Übertragung in einer größeren axialen Entfernung zwischen den beiden Transceiveranordnungen. Vorzugsweise kann der axiale Abstand zwischen der ersten Transceiveranordnung und der zweiten Transceiveranordnung kleiner als 10 cm, insbesondere vorzugsweise kleiner als 5 cm und ganz besonders vorzugsweise kleiner als 1 cm sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1A, 1B: Draufsichten auf eine erfindungsgemäße Antennenanordnung,
- Fig. 2: eine Darstellung der Richtcharakteristik einer erfindungsgemäßen Antennenanordnung,
- Fig. 3: eine Querschnittsdarstellung einer erfindungsgemäßen Antennenanordnung,
- Fig. 4A: eine Draufsicht zweier zueinander verdrehter Antennenanordnungen,
- Fig. 4B: eine Schnittdarstellung eines erfindungsgemäßen Kommunikationssystems mit zwei Antennenanordnungen,
- Fig. 5A, 5B: Blockdiagramme von zwei Varianten einer erfindungsgemäßen Transceiveranordnung,
- Fig. 6: eine Draufsicht einer Kombination von zwei verschiedenen Antennenanordnungen zur drahtlosen Vollduplexdatenübertragung und
- Fig. 7: eine isometrische Darstellung einer erfindungsgemäßen Antennenanordnung mit weiteren zentral geführten Leitungen.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

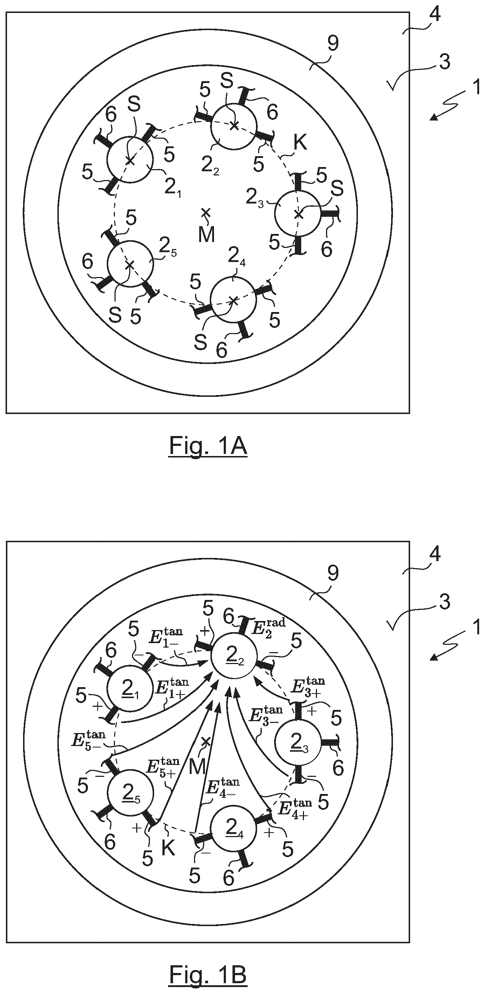

In Fig. 1A ist eine Draufsicht einer Antennenanordnung 1 aus mehreren einzelnen Antennen 2₁, 2₂, 2₃, 2₄, 2₅ dargestellt, welche als Patch-Antennen ausgebildet sind und auf einer Seitenfläche 3 einer elektrischen Leiterplatte 4 fixiert sind. Die einzelnen Patch-Antennen sind mit ihrem Schwerpunkt S, welcher gleichzeitig ihr Mittelpunkt ist, auf einer Kreislinie K um einen Mittelpunkt M der Antennenanordnung 1 äquidistant angeordnet. Jede einzelne Antenne 2 weist beispielsweise einen runden Querschnitt auf. Denkbar ist aber auch jede andere Geometrie der Antenne 2₁, 2₂, 2₃, 2₄, 2₅, welche jeweils symmetrisch zu einem radialen Strahl ausgebildet ist, welcher jeweils beginnend vom Mittelpunkt M der Antennenanordnungen 1 durch den jeweiligen Schwerpunkt S der einzelnen Antenne 2₁, 2₂, 2₃, 2₄, 2₅ verläuft. Darüber hinaus ist die Quererstreckung jeder einzelnen Antenne 2 vorzugsweise identisch ausgebildet.

Jede Antenne 2₁, 2₂, 2₃, 2₄, 2₅ ist jeweils mit einem Paar von ersten Signalleitungen 5 verbunden, welche jeweils ein symmetrisches bzw. differenzielles Signal übertragen. Die beiden ersten Signalleitungen 5 weisen jeweils eine tangentiale Orientierung zum Mittelpunkt M der Antennenanordnung 1 auf. Die Ein- oder Ausspeisepunkte der beiden ersten Signalleitungen 5 in die jeweilige Antenne bzw. aus der jeweiligen Antenne 2₁, 2₂, 2₃, 2₄, 2₅ sind vorzugsweise symmetrisch zum Schwerpunkt S der jeweiligen Antenne 2₁, 2₂, 2₃, 2₄, 2₅ angeordnet. Vorzugsweise sind die Ein- oder Ausspeisepunkte der beiden ersten Signalleitungen 5 innerhalb des Randes der jeweiligen Antenne 2₁, 2₂, 2₃, 2₄, 2₅ angeordnet. Sie können aber auch am Rand der jeweiligen Antenne 2₁, 2₂, 2₃, 2₄, 2₅ oder geringfügig außerhalb des Randes der jeweiligen Antenne 2₁, 2₂, 2₃, 2₄, 2₅ angeordnet sein. Jede Antenne 2₁, 2₂, 2₃, 2₄, 2₅ ist zusätzlich mit einer zweiten Signalleitung 6 verbunden, welche jeweils ein asymmetrisches bzw. single-ended Signal übertragen. Die zweiten Signalleitungen 6 weisen jeweils eine radiale Orientierung zum Mittelpunkt M der Antennenanordnung 1 auf. Die zweiten Signalleitungen 6 können jeweils entweder wie in Fig. 1A dargestellt radial außerhalb der jeweiligen Antenne 2₁, 2₂, 2₃, 2₄, 2₅ oder radial innerhalb der jeweiligen Antenne 2₁, 2₂, 2₃, 2₄, 2₅ angeordnet sein. Die Ein- oder Ausspeisepunkte der einzelnen zweiten Signalleitungen 6 in die jeweilige Antenne bzw. aus der jeweiligen Antenne 2₁, 2₂, 2₃, 2₄, 2₅ können vorzugsweise ebenfalls innerhalb des Rands der jeweiligen Antenne 2₁, 2₂, 2₃, 2₄, 2₅ oder am Rand bzw. geringfügig außerhalb des Randes der jeweiligen Antenne 2₁, 2₂, 2₃, 2₄, 2₅ angeordnet sein.

Die Paare von ersten Signalleitungen 5 können in einer ersten Variante einer Antennenanordnung 1 jeweils ein Sendesignal, vorzugsweise ein phasengleiches Sendesignal mit jeweils gleicher Signalamplitude, in die jeweilige Antenne 2₁, 2₂, 2₃, 2₄, 2₅ zur Abstrahlung einer entsprechenden elektromagnetischen Welle einspeisen. Die zweiten Signalleitungen 6 können in der ersten Variante einer Antennenanordnung 1 jeweils ein Empfangssignal aus der jeweiligen Antenne 2₁, 2₂, 2₃, 2₄, 2₅ ausspeisen, welches der empfangenen elektromagnetischen Welle der jeweiligen Antenne 2₁, 2₂, 2₃, 2₄, 2₅ entspricht. Aufgrund der orthogonalen Anordnung des Paares von ersten Signalleitungen 5 zur zweiten Signalleitung 6 für jede Antenne 2₁, 2₂, 2₃, 2₄, 2₅ ist die Polarisation der von einer jeweiligen Antenne 2₁, 2₂, 2₃, 2₄, 2₅ abgestrahlten elektromagnetischen Welle orthogonal zur Polarisation der von derselben Antenne 2₁, 2₂, 2₃, 2₄, 2₅ empfangenen elektromagnetischen Welle. Somit wird ein Übersprechen zwischen der abgestrahlten elektromagnetischen Welle und der empfangenen elektromagnetischen Welle innerhalb einer einzelnen Antenne 2₁, 2₂, 2₃, 2₄, 2₅ zumindest teilweise, vorzugsweise vollständig kompensiert. In einer zweiten Variante einer Antennenanordnung 1 übertragen die beiden ersten Signalleitungen 5 jeweils das Empfangssignal der jeweiligen Antenne 2₁, 2₂, 2₃, 2₄, 2₅, während die zweiten Signalleitungen 6 jeweils das Sendesignal der jeweiligen Antenne 2₁, 2₂, 2₃, 2₄, 2₅ übertragen.

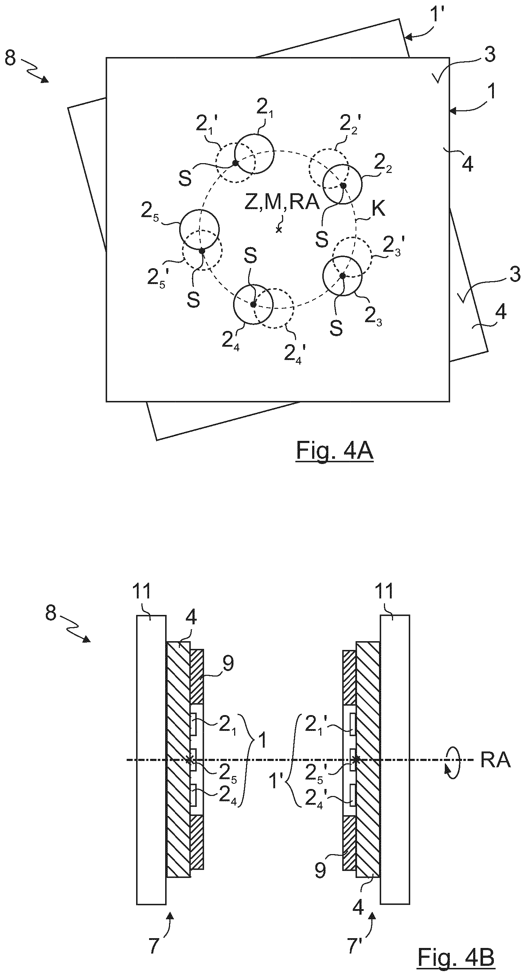

Um in einem Kommunikationssystem 8 (siehe hierzu Fig. 4B) aus zwei miteinander kommunizierenden Transceiveranordnungen 7 und 7' mit jeweils einer Antennenanordnung 1 bzw. 1' Reflexionen von elektromagnetischen Wellen zwischen den beiden Antennenanordnungen 1 und 1' zu dämpfen, ist um die Antennenanordnung 1 eine Schicht 9 aus einem Absorbermaterial vorzugsweise ringförmig auf derselben Seitenfläche 3 der elektrischen Leiterplatte 4 aufgebracht, auf der auch die einzelnen Patch-Antennen angeordnet sind.

Eine teilweise bzw. vorzugsweise vollständige Kompensation des Übersprechens von abgestrahlten elektromagnetischen Wellen und von empfangenen elektromagnetischen Wellen zwischen den einzelnen Antennen 2₁, 2₂, 2₃, 2₄, 2₅ wird schematisch anhand der Antennenanordnung 1 in Fig. 1B wie folgt erläutert. Hierbei wird beispielhaft das Übersprechen zwischen abgestrahlten und empfangenen elektromagnetischen Wellen im Bezug zur Antenne 2₂ erläutert:

aus der Antenne 2₂ wird über die radial orientierte zweite Signalleitung 6 ein Empfangssignal ausgespeist, das der empfangenen elektromagnetischen Welle der Antenne 2₂ entspricht und zu einem bestimmten Zeitpunkt ein elektrisches Potenzial E^{rad}₂ aufweist. In den tangential orientierten Paaren der ersten Signalleitungen 5 wird jeweils ein symmetrisches bzw. differenzielle Sendesignal in die jeweilige Antenne 2₁, 2₂, 2₃, 2₄, 2₅ eingespeist. Die Einspeisung der vorzugsweise phasen- und/oder amplitudengleichen Sendesignale erfolgt bei jeder Antenne 2₁, 2₂, 2₃, 2₄, 2₅ jeweils derart, dass das elektrische Potenzial des differenziellen Sendesignals an den nächstbenachbarten Ein- und Ausspeisepunkten eines jeweiligen Paares von unmittelbar benachbarten Antennen jeweils eine gleiche Amplitude und eine entgegengesetzte Phase, d. h. einen Phasenunterschied von 180°, aufweisen.

Somit weist das Sendesignal am Einspeisepunkt der Antennen 2₁, welche unmittelbar benachbart zur Antenne 2₂ positioniert ist, ein elektrisches Potenzial E^{tan}₁₋ und das Sendesignal am Einspeisepunkt, welcher ebenfalls unmittelbar benachbart zur Antenne 2₂ positioniert ist, ein gleich großes elektrisches Potenzial E^{tan}₃₊ mit entgegengesetzter Phase auf. Außerdem sind die Abstände dieser Einspeisepunkte der Sendesignale in die Antennen 2₁ und 2₃ zum Ausspeisepunkt der von der Antenne 2₂ empfangenen Welle jeweils gleich groß.

Das Sendesignal am anderen Einspeisepunkt der Antennen 2₁, welcher weiter entfernt zur Antenne 2₂ positioniert ist, weist ein elektrisches Potenzial E^{tan}₁₊ und das Sendesignal am anderen Einspeisepunkt der Antennen 2₃, welcher ebenfalls weiter entfernt zur Antenne 2₂ positioniert ist, weist ein gleich großes elektrisches Potenzial E^{tan}₃₋ mit entgegengesetzter Phase auf. Außerdem sind die Abstände dieser Einspeisepunkte der Sendesignale in die Antennen 2₁ und 2₃ zum Ausspeisepunkt der von der Antenne 2₂ empfangenen Welle ebenfalls jeweils gleich groß.

Aufgrund der gleichen Abstände der nächstbenachbarten Einspeisepunkte der Antennen 2₁ und 2₃ zum Ausspeisepunkt der Bezugsantenne 2₂ und der Amplitudengleichheit und der entgegengesetzten Phase der Sendesignale an den beiden zur Bezugsantenne 2₂ nächst benachbarten Einspeisepunkte der Antennen 2₁ und 2₃ sowie der gleichen Abstände der weiter entfernten Einspeisepunkte der Antennen 2₁ und 2₃ zum Ausspeisepunkt der Bezugsantenne 2₂ und der Amplitudengleichheit und der entgegengesetzten Phase der Sendesignale an den beiden zur Bezugsantenne 2₂ weiter entfernten Einspeisepunkte der Antennen 2₁ und 2₃ kompensieren sich die von den beiden Antennen 2₁ und 2₃ jeweils abgestrahlten und auf die Bezugsantenne 2₂ übersprechenden elektromagnetischen Wellen im Ausspeisepunkt der von der Bezugsantenne 2₂ empfangenen elektromagnetischen Welle gegenseitig.

Für das Übersprechen der von den Antennen 2₄ und 2₅ jeweils abgestrahlten elektromagnetischen Wellen auf den Ausspeisepunkt der von der Bezugsantenne 2₂ empfangenen elektromagnetischen Welle gilt das Gleiche:
das elektrische Potenzial E^{tan}₄₊ des am Einspeisepunkt der Antenne 2₄ eingespeisten Sendesignals, welches nächst benachbart zum Ausspeisepunkt der Bezugsantenne 2₂ positioniert ist, weist die gleiche Amplitude und die entgegengesetzte Phase zum elektrischen Potenzial E^{tan}₅₋ des am Einspeisepunkt der Antenne 2₅ eingespeisten Sendesignals, welches nächst benachbart zum Ausspeisepunkt der Bezugsantenne 2₂ positioniert ist, auf. Die Abstände der zum Ausspeisepunkt der Bezugsantenne 2₂ nächstbenachbarten Einspeisepunkte der Antennen 2₄ und 2₅ zum Ausspeisepunkt der Bezugsantenne 2₂ sind identisch.

Das Sendesignal am anderen Einspeisepunkt der Antennen 2₄, welcher weiter entfernt zur Bezugsantenne 2₂ positioniert ist, weist ein elektrisches Potenzial E^{tan}₄₋ und das Sendesignal am anderen Einspeisepunkt der Antennen 2₅, welcher ebenfalls weiter entfernt zur Antenne 2₂ positioniert ist, weist ein gleich großes elektrisches Potenzial E^{tan}₅₊ mit entgegengesetzter Phase auf. Außerdem sind die Abstände dieser Einspeisepunkte der Sendesignale in die Antennen 2₄ und 2₅ zum Ausspeisepunkt der von der Antenne 2₂ empfangenen Welle ebenfalls jeweils gleich groß.

Somit kompensieren sich die von den Antennen 2₄ und 2₅ jeweils abgestrahlten elektromagnetischen Wellen und in den Ausspeisepunkt der Bezugsantenne 2₂ übersprechenden elektromagnetischen Wellen in äquivalenter Weise wie beim Antennen-paar 2₁ und 2₃ im Ausspeisepunkt der Bezugsantenne 2₂.

Der in Fig. 1B für die Bezugsantenne 2₂ dargestellte Zusammenhang des Übersprechens gilt äquivalent für das Übersprechen auf die übrigen Antennen 2₂, 2₃, 2₄ und 2₅. Außerdem geht dieser Zusammenhang auch für das Übersprechen der von einzelnen Bezugsantennen jeweils abgestrahlten elektromagnetischen Welle auf die in den übrigen Antennen jeweils empfangenen elektromagnetischen Wellen. Die in Fig. 1B für die zweite Variante der Antennenanordnung 1 jeweils dargestellte Kompensation des Übersprechens gilt äquivalent auch für die erste Variante der Antennenanordnung 1.

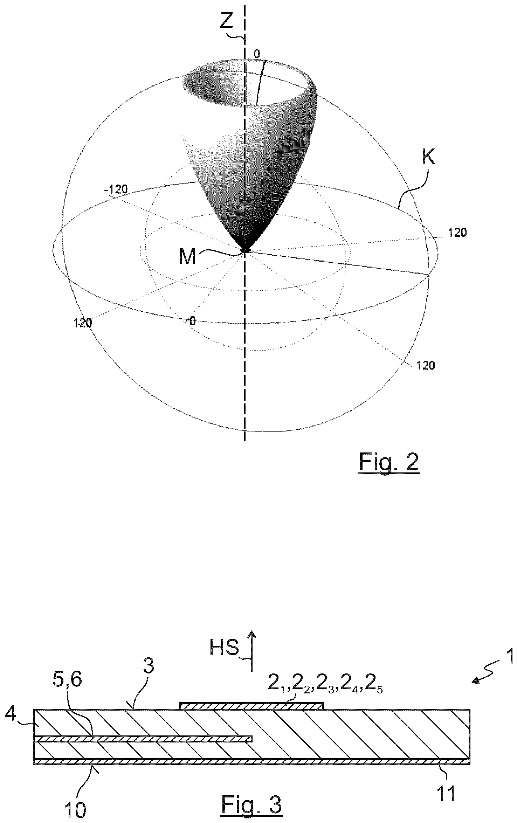

Insbesondere die phasengleiche, d. h. die phasenkohärente, und amplitudengleiche Einspeisung desselben Sendesignals in alle Antennen 2₁, 2₂, 2₃, 2₄, 2₅ der erfindungsgemäßen Antennenanordnung 1 ergibt eine rotationssymmetrische Richtcharakteristik um eine Mittenachse Z der Antennenanordnung 1 im Nahfeldbereich der Antennenanordnung 1 entsprechend Fig. 2. Diese rotationssymmetrische Richtcharakteristik ermöglicht erst eine drahtlose Inband-Vollduplex-Übertragung bei zueinander phasenversetzt angeordneten Antennen von zwei zueinander fixierten Antennenanordnungen 1 oder von zwei zueinander rotierenden Antennenanordnungen 1 von zwei miteinander kommunizierenden Transceiveranordnungen 7 und 7' eines Kommunikationssystems 8. Somit ist eine funktionsfähige rotationsinvariante drahtlose Inband-Vollduplex-Übertragung zwischen den Antennenanordnungen 1 bzw. 1' von zwei gegenüberliegenden erfindungsgemäßen Transceiveranordnungen 7 und 7' eines erfindungsgemäßen Kommunikationssystems 8 geschaffen.

Aus der Querschnittsdarstellung in Fig. 3 geht ein beispielhafter Ausschnitt einer Antennenanordnung 1 hervor:
auf einer Seitenfläche 3 (hier der oberen Seitenfläche) der elektrischen Leiterplatte 4 ist eine der planaren Antennen 2₁, 2₂, 2₃, 2₄, 2₅, welche beispielhaft als eine Patch-Antenne ausgebildet ist, aufgebracht. An der gegenüberliegenden Seitenfläche 10 (hier der unteren Seitenfläche) der elektrischen Leiterplatte 4 ist in üblicherweise Vorgehensweise eine metallisierte Schicht 11 als Masse- oder Bezugsebene vorgesehen, welche vorzugsweise die von der jeweiligen planaren Antenne 2₁, 2₂, 2₃, 2₄, 2₅ abgestrahlte elektromagnetische Welle in Richtung der Hauptstrahlrichtung HS der Antennenanordnung 1 ausrichtet. Die Ein- oder Ausspeisung des Sende- bzw. Empfangssignals in die bzw. aus der jeweiligen planaren Antenne 2₁, 2₂, 2₃, 2₄, 2₅ erfolgt über ein Paar von ersten Signalleitungen 5 oder alternativ über eine zweite Signalleitung 6, welche jeweils in Fig. 3 beispielsweise als eine Signalleitung innerhalb der elektrischen Leiterplatte 4 zwischen der metallisierten Masse-Schicht 11 und der jeweiligen planaren Antenne 2₁, 2₂, 2₃, 2₄, 2₅ ausgebildet ist. Die Kopplung zwischen der jeweiligen planaren Antenne 2₁, 2₂, 2₃, 2₄, 2₅ und dem Paar von ersten Signalleitungen 5 bzw. alternativ der zweiten Signalleitung 6 erfolgt in der Darstellung der Fig. 3 kapazitiv. Alternativ ist auch eine galvanische Kopplung über eine elektrisch leitende Durchkontaktierung zwischen der jeweiligen planaren Antenne 2₁, 2₂, 2₃, 2₄, 2₅ und der Ein- oder Ausspeiseleitung möglich. Alternativ kann auch eine elektromagnetische Nahfeldkopplung über Zwischenantennen implementiert sein, welche jeweils als eine metallische Schicht zwischen der planaren Antenne 2 und der Ein- oder Ausspeiseleitung ausgebildet ist.

Aus Fig. 4A ist schematisch in einer Draufsicht die Verdrehung der Antennen 2₁, 2₂, 2₃, 2₄, 2₅ einer ersten Antennenanordnung 1 zu den Antennen 2₁', 2₂', 2₃', 2₄', 2₅' (gestrichelt dargestellt) einer zweiten Antennenanordnung 1' um eine gemeinsame Drehachse RA ersichtlich. Die gemeinsame Drehachse RA fällt hierbei mit den jeweiligen Mittenachsen Z der beiden Antennenanordnungen 1 und 1' zusammen, was aber nicht zwingend so sein muss. Somit fluchten die Kreise bzw. Kreislinien K zueinander, auf denen die Schwerpunkte S der Antennen 2₁, 2₂, 2₃, 2₄, 2₅ der ersten Antennenanordnung 1 und die Schwerpunkte der Antennen 2₁', 2₂', 2₃', 2₄', 2₅' der zweiten Antennenanordnung 1' jeweils angeordnet sind. Die Mittelpunkte M dieser beiden Kreise K sind somit ebenfalls gegenüberliegend angeordnet. Die Anordnung der Antennen 2₁, 2₂, 2₃, 2₄, 2₅ innerhalb eines ringförmigen Abschnitts der ersten Antennenanordnung 1, welcher zu einem ringförmigen Abschnitt der zweiten Antennenanordnung 1' fluchtet, in dem die Antennen 2₁', 2₂', 2₃', 2₄', 2₅' der zweiten Antennenanordnung 1'angeordnet sind, ermöglicht in Kombination mit der rotationssymmetrischen Ausbildung des elektrischen Feldes im Nahfeldbereich der ersten und der zweiten Antennenanordnung 1 und 1' eine reflexionsminimierte drahtlose Inband-Vollduplex-Datenübertragung zwischen den beiden Transceiveranordnungen 7 und 7' des Kommunikationssystems 8.

Aus der Querschnittsdarstellung in Fig. 4B geht ein erfindungsgemäßes Kommunikationssystem 8 aus einer ersten Transceiveranordnung 7 und einer zweiten Transceiveranordnung 7' hervor, welche jeweils um eine gemeinsame Drehachse RA relativ zueinander drehbar sind. Hierbei kann die erste Transceiveranordnung 7 als eine noch zu erläuternde erste Variante einer Transceiveranordnung und die zweite Transceiveranordnung 7' als eine noch zu erläuternde zweite Variante einer Transceiveranordnung ausgebildet sein. Die beiden Transceiveranordnungen 7 und 7' weisen jeweils eine Antennenanordnung 1 bzw. 1' aus einzelnen Antennen 2₁, 2₂, 2₃, 2₄, 2₅ bzw. 2₁', 2₂', 2₃', 2₄', 2₅' auf, welche auf einer elektrischen Leiterplatte 4 aufgebracht sind und von einer ebenfalls auf der elektrischen Leiterplatte 4 ringförmig aufgebrachten Schicht 9 aus Absorbermaterial umgeben sind. Neben der Antennenanordnung 1 bzw. 1' weisen die beiden Transceiveranordnungen 7 und 7' jeweils zusätzliche technische Funktionseinheiten auf, die in den folgenden Figuren noch erläutert werden und vorzugsweise auf einer weiteren elektrischen Leiterplatte 4 angeordnet sind.

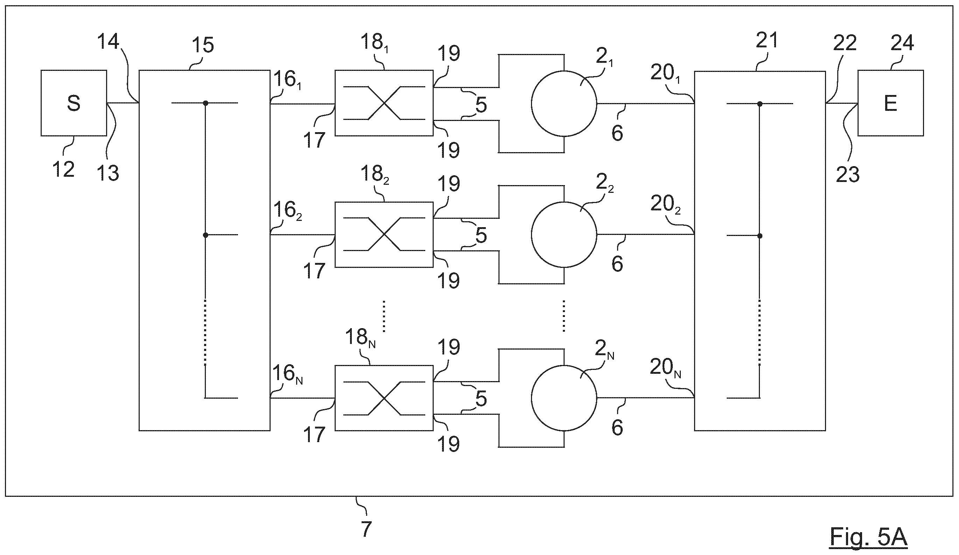

Eine erste Variante einer Transceiveranordnung bzw. eine erste Transceiveranordnung 7 gemäß Fig. 5A weist eine Sendeeinheit 12 auf, welche ausgebildet ist, ein Sendesignal zu erzeugen. Das Sendesignal wird hierbei und im Folgenden als erstes Sendesignal bezeichnet. Ein Ausgangsanschluss 13 der Sendeeinheit 12 ist mit dem Eingangsanschluss 14 einer Einheit zum Signalverzweigen 15 vorzugsweise elektrisch, insbesondere vorzugsweise galvanisch, verbunden. Die Einheit zum Signalverzweigen 15 ist ausgebildet, aus dem am Eingangsanschluss 14 empfangenen ersten Sendesignal eine der Anzahl N von Antennen 2 entsprechende Anzahl N von gleichen ersten Sendesignalen zu erzeugen, welche jeweils an den einzelnen Ausgangsanschlüssen 16₁, 16₂,..., 16_{N} anliegen. Die Einheit zum Signalverzweigen 15 ist vorzugsweise als ein Hochfrequenz-Leistungsteiler, insbesondere vorzugsweise als ein Wilkinson-Leistungsteiler, realisiert.

Die einzelnen Ausgangsanschlüsse 16₁, 16₂,..., 16_{N} der Einheit zum Signalverzweigen 15 sind jeweils mit einem asymmetrischen Anschluss 17 eines zugehörigen ersten Symmetriergliedes 18₁, 18₂,..., 18_{N} verbunden. Das einzelne erste Symmetrierglied 18₁,18₂,...,18_{N} der ersten Transceiveranordnung 7 ist jeweils ausgebildet, das am jeweiligen asymmetrischen Anschluss 17 anliegende asymmetrische bzw. single-ended erste Sendesignal in ein symmetrisches bzw. differenzielles erstes Sendesignal zu wandeln, welche jeweils an den symmetrischen Anschlüssen 19 anliegen. Die einzelnen ersten Symmetrierglieder 18₁,18₂,..., 18_{N} sind vorzugsweise jeweils als 180°-Koppler oder Ringkoppler realisiert. Die symmetrischen Anschlüsse 19 der einzelnen ersten Symmetrierglieder 18₁,18₂,..., 18_{N} sind jeweils über ein Paar von ersten Signalleitungen 5 mit Einspeisepunkten einer zugehörigen Antenne 2₁,2₂,..., 2_{N} verbunden. Die einzelnen Antennen 2₁,2₂,..., 2_{N} strahlen jeweils eine dem ersten Sendesignal entsprechende elektromagnetische Welle aus.

Die von den einzelnen Antennen 2₁,2₂,..., 2_{N} jeweils empfangenen elektromagnetischen Wellen werden in einem zugehörigen Ausspeisepunkt in die mit der jeweiligen Antenne 2₁, 2₂,..., 2_{N} verbundene zweite Signalleitung 6 als asymmetrisches bzw. single-ended Empfangssignal ausgespeist. Das aus den einzelnen Antennen 2₁,2₂,..., 2_{N} der ersten Transceiveranordnung 7 in die zugehörige zweite Signalleitung 6 jeweils ausgespeiste Empfangssignal wird hierbei und im Folgenden als zweites Empfangssignal bezeichnet, da es dem von der zweiten Transceiveranordnung 7' gesendeten zweiten Sendesignal entspricht.

Die mit den Ausspeisepunkten der einzelnen Antennen 2₁, 2₂,..., 2_{N} der ersten Transceiveranordnung 7 jeweils verbundenen zweiten Signalleitungen 6 sind an zugehörige Eingangsanschlüsse 20₁, 20₂,..., 20_{N} einer Einheit zum Signalkombinieren 21 geführt. Die Einheit zum Signalkombinieren 21 ist ausgebildet, die an den einzelnen Eingangsanschlüssen 20₁, 20₂,..., 20_{N} jeweils anliegenden zweiten Empfangssignale zu einem gemeinsamen zweiten Empfangssignal zu addieren bzw. zu kombinieren und am Ausgangsanschluss 22 auszugeben. Der Ausgangsanschluss 22 der Einheit zum Signalkombinieren 21 ist mit dem Eingangsanschluss 23 der Empfangseinheit 24 verbunden. Die Empfangseinheit 24 ist ausgebildet, die im zweiten Empfangssignal enthaltenen Informationen über weitere Signalverarbeitungsschritte zu gewinnen.

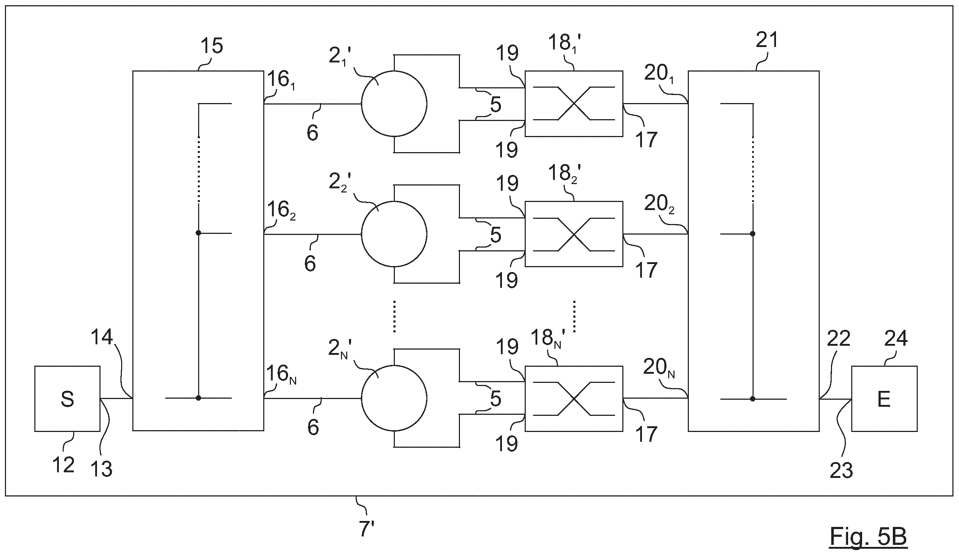

Um die Polarisation der sendenden Antennen 2₁,2₂,..., 2_{N} der ersten Transceiveranordnung 7 an die Polarisation der empfangenden Antennen 2₁', 2₂',..., 2_{N}' der zweiten Transceiveranordnung 7' und die Polarisation der empfangenden Antennen 2₁, 2₂,..., 2_{N} der ersten Transceiveranordnung 7 an die Polarisation der sendenden Antennen 2₁', 2₂',..., 2_{N}' der zweiten Transceiveranordnung 7' jeweils auszurichten, ist eine zweite Transceiveranordnung 7' gemäß Fig. 5B gegenüber der ersten Transceiveranordnung 7 gemäß Fig. 5A modifiziert ausgebildet:
Das von der Sendeeinheit 12 der zweiten Transceiveranordnung 7' erzeugte zweite Sendesignal wird über dessen Ausgangsanschluss 13 an den Eingangsanschluss 14 der Einheit zum Signalverzweigen 15 übertragen. Die Einheit zum Signalverzweigen 15 ist ausgebildet, das einzige zweite Sendesignal am Eingangsanschluss 14 in eine der Anzahl N von Antennen 2₁', 2₂",..., 2_{N}' der zweiten Transceiveranordnung 7' entsprechende Anzahl von zweiten Sendesignalen zu vervielfachen und an den Ausgangsanschlüssen 16₁, 16₂,..., 16_{N} auszugeben. Die an den Ausgangsanschlüssen 16₁, 16₂,..., 16_{N} der Einheit zum Signalverzweigen 15 der zweiten Transceiveranordnung 7' anliegenden zweiten Sendesignale werden als asymmetrische zweite Sendesignale direkt über eine zugehörige zweite Signalleitung 6 in den jeweiligen Einspeisepunkt der zugehörigen Antenne 2₁', 2₂', 2₃', 2₄',2₅' der zweiten Transceiveranordnung 7' eingespeist und jeweils als elektromagnetische Wellen abgestrahlt. Die von den einzelnen Antennen 2₁', 2₂', 2₃', 2₂', 2₅' der zweiten Transceiveranordnung 7' jeweils empfangenen elektromagnetischen Wellen werden jeweils an den jeweiligen Paaren von Ausspeisepunkten in das zugehörige Paar von ersten Signalleitungen 5 als symmetrische bzw. differenzielle erste Empfangssignale ausgespeist (da sie den ersten Sendesignalen der ersten Transceiveranordnung 7 entsprechen). Die jeweiligen Paare von ersten Signalleitungen 5 sind mit den symmetrischen Anschlüssen 19 der zugehörigen zweiten Symmetrierglieder 18₁', 18₂',..., 18_{N}' verbunden.

Die zweiten Symmetrierglieder 18₁', 18₂',..., 18_{N}' der zweiten Transceiveranordnung 7' sind jeweils ausgebildet, das symmetrische zweite Empfangssignal an den symmetrischen Eingangsanschlüssen 19 in ein zugehöriges asymmetrisches zweites Empfangssignal an dem jeweiligen symmetrischen Ausgangsanschluss 17 zu wandeln. Die symmetrischen Ausgangsanschlüsse 17 der einzelnen Symmetrierglieder 18₁', 18₂',..., 18_{N}' sind mit zugehörigen Eingangsanschlüssen 20₁, 20₂,..., 20_{N} der Einheit zum Signalkombinieren 21 verbunden. Die Einheit zum Signalkombinieren 21 der zweiten Transceiveranordnung 7' ist ausgebildet, die an den einzelnen Eingangsanschlüssen 20₁, 20₂,..., 20_{N} jeweils anliegenden zweiten Empfangssignale zu einem einzigen zweiten Empfangssignal am Ausgangsanschluss 22 zu addieren bzw. zu kombinieren. Das einzige zweite Empfangssignal am Ausgangsanschluss 22 der Einheit zum Signalkombinieren 21 wird der Empfangseinheit 24 zugeführt, um die im zweiten Empfangssignal übertragenen Informationen zu gewinnen.

Alternativ zu einem symmetrischen ersten Sende- und Empfangssignal und einem asymmetrischen zweiten Sende- und Empfangssignal gemäß den beiden Transceiveranordnungen 7 und 7' in den Figuren 5A und 5B ist auch ein asymmetrisches erstes Sende- und Empfangssignal und ein symmetrisches zweites Sende- und Empfangssignale denkbar.

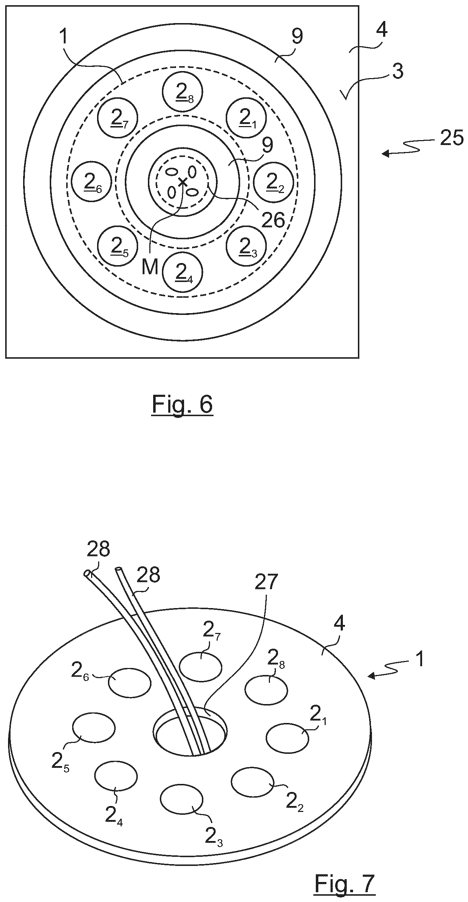

In Fig. 6 ist eine beispielhafte Anwendung der erfindungsgemäßen Antennenanordnung 1 dargestellt:
die Fig. 6 stellt ein Antennensystem 25 dar, in dem auf einer gemeinsamen elektrischen Leiterplatte 4 die erfindungsgemäße Antennenanordnung 1 mit einer Antennenanordnung 26 gemäß der EP 4 150 708 B1 kombiniert ist. Die Antennenanordnung 26, welche im Zentrum des Antennensystems 25 angeordnet ist, weist in bekannterweise elliptisch geformte planare Antennen auf, welche ein Paar von Sendeantennen und ein dazu im Wesentlichen orthogonal angeordnetes Paar von Empfangsantennen ausbilden. Um die Antennenanordnung 26 herum ist die erfindungsgemäße Antennenanordnung 1 aus den beispielsweise acht planaren Antennen 2₁, 2₂, 2₃, 2₄, 2₅, 2₆, 2₇, 2₈ ringförmig angeordnet. Zwischen der erfindungsgemäßen Antennenanordnung 1 und der bekannten Antennenanordnung 26 kann eine weitere ringförmig geformte Schicht 9 aus Absorbermaterial ausgebildet sein. Mit einem derartiges Antennensystem 25 lässt sich eine drahtlose Vollduplex-Datenübertragung in zwei Übertragungskanälen mit jeweils einem unterschiedlichen Übertragungsprotokoll realisieren.

In einem weiteren Anwendungsbeispiel der erfindungsgemäßen Antennenanordnung 1 gemäß der Fig. 7 weist die elektrische Leiterplatte 4, auf der die Antennenanordnung 1 aus den ringförmig angeordneten planaren Antennen 2₁, 2₂, 2₃, 2₄, 2₅, 2₆, 2₇, 2₈ ausgebildet ist, in ihrem Zentrum eine Durchführung 27 auf. Durch die Durchführung 27 der elektrischen Leiterplatte 4 lassen sich zusätzliche Leitungen 28 hindurchführen, welche zur Übertragung eines Mediums wie beispielsweise eines pneumatischen oder ein hydraulischen Fluids oder einer höheren Energie dienen, welche sich nicht drahtlos zwischen zwei Einrichtungen übertragen lassen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

## Patentansprüche

1. Antennenanordnung (1;1') für eine Transceiveranordnung (7;7') aufweisend mehrere Antennen (2₁, 2₂, 2₃, 2₄, 2₅, 2₆, 2₇, 2₈, ..., 2_{N};2₁', 2₂', 2₃', 2₄', 2₅',..., 2_{N}') welche jeweils ausgebildet sind, eine elektromagnetische Welle abzustrahlen und gleichzeitig eine elektromagnetische Welle zu empfangen, wobei die mehreren Antennen (2₁, 2₂, 2₃, 2₄, 2₅, 2₆, 2₇, 2₈, ..., 2_{N}; 2₁', ,2₂', 2₃', 2₄', 2₅', ... ,2_{N}') jeweils um eine gemeinsame Mittenachse (Z) der Antennenanordnung (1;1') herum angeordnet sind, vorzugsweise entlang eines gemeinsamen gedachten Zylindermantels um die gemeinsame Mittenachse (Z), wobei zugehörige Schwerpunkte (S) von jeweils unmittelbar benachbarten Antennen (2₁, 2₂, 2₃, 2₄, 2₅, 2₆, 2₇, 2₈, ..., 2_{N}; 2₁', 2₃', 2₃', 2₄', 2₅' ,..., 2_{N}') jeweils äquidistant voneinander entfernt angeordnet sind, wobei jede Antenne (2₁, 2₂, 2₃, 2₄, 2₅, 2₆, 2₇, 2₈, ..., 2_{N}; 2₁', 2₂', 2₃', 2₄', 2₅' ,..., 2_{N}') jeweils mit wenigstens einer ersten Signalleitung (5) der Transceiveranordnung (7;7') und wenigstens einer zweiten Signalleitung (6) der Transceiveranordnung (7;7') elektrisch und/oder magnetisch verbunden ist, wobei in jeder Antenne (2₁, 2₂, 2₃, 2₄, 2₅, 2₆, 2₇, 2₈, ..., 2_{N}; 2₁', 2₂', 2₃', 2₄', 2₅' ,..., 2_{N}') jeweils die wenigstens eine erste Signalleitung (5) jeweils zur wenigstens einen zweiten Signalleitung (6) orthogonal orientiert ist, vorzugsweise die wenigstens eine erste Signalleitung (5) jeweils tangential und die wenigstens eine zweite Signalleitung (6) jeweils radial zur gemeinsamen Mittenachse (Z) orientiert sind, wobei die wenigstens eine erste Signalleitung (5) und die wenigstens eine zweite Signalleitung (6) jeweils derart ausgebildet sind, dass
i. die wenigstens eine erste Signalleitung (5) ein Sendesignal für die abgestrahlte elektromagnetische Welle und die wenigstens eine zweite Signalleitung (6) ein Empfangssignal der empfangenen elektromagnetischen Welle übertragen oder ii. die wenigstens eine erste Signalleitung (5) das Empfangssignal und die wenigstens eine zweite Signalleitung (6) das Sendesignal übertragen.

2. Antennenanordnung (1;1') gemäß Patentanspruch 1,
**dadurch gekennzeichnet,**
**dass** für jede Antenne (2₁,2₂,2,₃,2₄,2₅,2₆,2₇,2₈,...,2_{N};2₁',2₂',2₃' ,2₄' , 2₅' , ..., 2_{N}') jeweils das von den zugehörigen beiden ersten Signalleitungen (5) übertragene Sende- oder Empfangssignal jeweils ein symmetrisches Signal ist, wobei in jeder Antenne (2₁,2₂,2₃,2₄,2₅,2₆,2₇,2₈,...,2_{N}; 2₁',2₂',2₃',2₄',2₅',...,2_{N}') eines jeden Paares von jeweils unmittelbar benachbarten Antennen (2₁,2₂,2₃,2₄,2₅,2₆,2₇,2₈,...,2_{N};2₁',2₃',2₄',2₅',...,2_{N}') jeweils ein Ein- oder Ausspeisepunkt für das zugehörige symmetrische Signal ausgebildet ist, welche innerhalb des jeweiligen Paares jeweils zueinander nächst benachbart angeordnet sind und an welchen jeweils ein elektrisches Potential des zugehörigen symmetrischen Signal anliegt, deren Phasen zueinander gegenphasig sind.

3. Antennenanordnung (1;1') gemäß Patentanspruch 1 oder 2,
**dadurch gekennzeichnet,**
**dass** die wenigstens eine zweite Signalleitung (6) jeweils zum Schwerpunkt der jeweiligen Antenne (2₁,2₂,2₃,2₄,2₅,2₆,2₇, 2₈,...,2_{N};2₁',2₂',2₃',2₄',2₅",...,2_{N}') gerichtet ist.

4. Antennenanordnung (1;1') gemäß einem der Patentansprüche 1 bis 3,
**dadurch gekennzeichnet,**
**dass** die Antennen (2₁,2₂,2₃,2₄,2₅,2₆,2₇,2₈,...,2_{N};2₁',2₂',2₃',2₄' ,2₅',...,2_{N}') jeweils denselben Querschnitt in einer zur Mittenachse (Z) orthogonalen Richtung aufweisen, wobei für jede Antenne (2₁,2₂,2₃,2₄,2₅,2₆,2₇,2₈,...,2_{N};2₁',2₂',2₃',2₄',2₅',...,2_{N}') jeweils eine maximale Erstreckung in einer zur Mittenachse (Z) der Antennenanordnung (1;1') radialen Richtung und in einer zur Mittenachse (Z) der Antennenanordnung (1;1') tangentialen Richtung vorzugsweise gleich groß ist.

5. Antennenanordnung (1;1') gemäß einem der Patentansprüche 1 bis 4,
**dadurch gekennzeichnet,**
**dass** jede Antenne (2₁,2₂,2₃,2₄,2₅,2₆,2₇,2₈,...,2_{N};2₁',2₂',2₃',2₄', 2₅",...,2_{N}") jeweils als eine planare Antenne ausgebildet ist, welche jeweils vorzugsweise auf einer Seitenfläche (3) einer elektrischen Leiterplatte (4) oder auf einer zur Seitenfläche (3) parallelen Ebene der elektrischen Leiterplatte (4), angeordnet ist.

6. Antennenanordnung (1;1') gemäß Patentanspruch 5,
**dadurch gekennzeichnet,**
**dass** jede planare Antenne auf derselben Seitenfläche (3) oder auf derselben Ebene jeweils entlang eines gemeinsamen gedachten Kreisumfanges (K) relativ zu einem Mittelpunkt (M) angeordnet ist, welcher sich im Schnittpunkt (S) der gemeinsamen Mittenachse (Z) mit der Seitenfläche (3) bzw. der parallelen Ebene befindet.

7. Antennenanordnung (1;1') gemäß einem der Patentansprüche 1 bis 6,
**dadurch gekennzeichnet,**
**dass** die Antennenanordnung (1;1') mindestens drei Antennen, (2₁,2₂,2₃,2₄,2₅,2₆,2₇,2₈,...,2_{N};2₁',2₂',2₃',2₄',2₅',...,2_{N}') vorzugsweise mindestens fünf Antennen (2₁,2₂,2₃,2₄,2₅,2₆,2₇,2₈,..., 2_{N}; 2₁',2₂',2₃',2₄',2₅', ..., 2_{N}') und ganz besonders vorzugsweise mindestens sieben Antennen (2₁,2₂,2₃,2₄,2₅,2₆,2₇,2₈,...,2_{N}; 2₁',2₂,2₃',2₄',2₅',...,2_{N}') aufweist.

8. Antennenanordnung (1;1') gemäß einem der Patentansprüche 1 bis 7,
**dadurch gekennzeichnet,**
**dass** eine Einspeisung des Sendesignals in jede Antenne (2₁, 2₂,2₃,2₄,2₅,2₆,2₇,2₈,...,2_{N};2₁',2₂',2₃',2₄',2₅',...,2_{N}') jeweils von der zugehörigen wenigstens einen ersten Signalleitung (5) oder von der zugehörigen wenigstens einen zweiten Signalleitung (6) jeweils gleichphasig, vorzugsweise jeweils gleichphasig und jeweils mit einer gleichen Amplitude, erfolgt.

9. Transceiveranordnung (7;7') aufweisend eine Antennenanordnung (1;1') gemäß einem der Patentansprüche 1 bis 8, eine Sendeeinheit (12), eine Empfangseinheit (24), eine Einheit zum Signalverzweigen (15) und eine Einheit zum Signalkombinieren (21), wobei ein Ausgangsanschluss (13) der Sendeeinheit (12) mit einem Eingangsanschluss (14) der Einheit zum Signalverzweigen (15) und ein Ausgangsanschluss (22) der Einheit zum Signalkombinieren (21) mit einem Eingangsanschluss (23) der Empfangseinheit (24) verbunden sind, wobei
i. Ausganganschlüsse (16₁,16₂,...,16_{N}) der Einheit zum Signalverzweigen (15) jeweils mit der wenigstens einen ersten Signalleitung (5) der zugehörigen Antenne (2₁,2₂,2₃,2₄,2₅,2₆,2₇, 2₈,...,2_{N};2₁',2₂',2₃',2₄'2₅',...,2_{N}') und die zweiten Signalleitungen (6) jeder Antenne (2₁,2₂,2₃,2₄,2₅, 2₆,2₇, 2₈,...,2_{N}; 2₁',2₂',2₃', 2₄' ,2₅' ,...,2_{N}') jeweils mit einem zugehörigen Eingangsanschluss (20₁,20₂,...,20_{N}) der Einheit zum Signalkombinieren (21) verbunden sind, oder
ii. Ausgangsanschlüsse (16₁,16₂,...,16_{N}) der Einheit zum Signalverzweigen (15) jeweils mit der wenigstens einen zweiten Signalleitung (6) der zugehörigen Antenne (2₁, 2₂,2₃, 2₄, 2₅, 2₆, 2₇,2₈,...,2_{N};2₁',2₂',2₃', 2₄',2₅' ,...,2_{N}') und die ersten Signalleitungen (5) jeder Antenne (2_{1,}2₂,2₃,2₄,2₅,2₆,2₇,2₈,...,2_{N};2₁',2₂',2₃',2₄',2₅',...,2_{N}') jeweils mit dem zugehörigen Eingangsanschluss (20₁,20₂,...,20_{N}) der Einheit zum Signalkombinieren (21) verbunden sind.

10. Transceiveranordnung (7;7') gemäß Patentanspruch 9,
**dadurch gekennzeichnet,**
**dass** die Ausgangsanschlüsse (16₁,16₂,...,16_{N}) der Einheit zum Signalverzweigen (15) jeweils mit einem asymmetrischen Anschluss (17) eines zur jeweiligen Antenne (2₁,2₂,2₃,2₄,2₅,2₆, 2₇,2₈,...,2_{N}) gehörigen ersten Symmetriergliedes (18₁,18₂,...,18_{N}) verbunden sind, dessen symmetrische Anschlüsse (19) mit einem Paar von ersten Signalleitungen (5) der jeweiligen Antenne (2₁,2₂,2₃,2₄,2₅,2₆,2₇,2₈,...,2_{N}) verbunden sind, oder
ein Paar von ersten Signalleitungen (5) jeder Antenne (2₁',2₂',2₃',2₄',2₅',...,2_{N}') jeweils mit symmetrischen Anschlüssen (19) eines zur jeweiligen Antenne
(2₁' , 2₂', 2₃' , 2₄' 2₅',..., 2_{N}') gehörigen zweiten Symmetriergliedes (18₁',18₂',..., 18_{N}') verbunden sind, dessen asymmetrischer Anschluss (17) mit dem zugehörigen Eingangsanschluss (20₁,20₂,...,20_{N}) der Einheit zum Signalkombinieren (21) verbunden ist.

11. Kommunikationssystem (8) aufweisend eine erste Transceiveranordnung (7) und eine zweite Transceiveranordnung (7') gemäß Patentanspruch 9 oder 11 zur Bereitstellung einer drahtlosen Inband-Vollduplex-Übertragung zwischen den Transceiveranordnungen (7,7'), wobei die erste Transceiveranordnung (7) eine zu einem ersten Sendesignal gehörige erste elektromagnetische Welle abstrahlt, welche die zweite Transceiveranordnung (7') empfängt und in ein zugehöriges erstes Empfangssignal überführt, und die zweite Transceiveranordnung (7') eine zu einem zweiten Sendesignal gehörige zweite elektromagnetische Welle abstrahlt, welche die erste Transceiveranordnung (7) empfängt und in ein zugehöriges zweites Empfangssignal überführt.

12. Kommunikationssystem (8) gemäß Patentanspruch 11,
**dadurch gekennzeichnet,**
**dass** die beiden Transceiveranordnungen (7, 7") relativ zueinander um eine gemeinsame Drehachse (RA) drehbar sind, welche mit den Mittenachsen (Z) der zu den beiden Transceiveranordnungen (7, 7') jeweils gehörigen Antennenanordnung (1, 1') zusammenfällt.

13. Kommunikationssystem (8) gemäß Patentanspruch 11 oder 12,
**dadurch gekennzeichnet,**
**dass** der Zylindermantel, entlang welcher jede Antenne (2₁, 2₂,2,₃, 2₄, 2₅, 2₆, 2₇, 2₈,..., 2_{N}) der ersten Transceiveranordnung (7) jeweils angeordnet ist, zum Zylindermantel fluchtet, entlang welcher jede Antenne (2₁',2₂',2₃',2₄',2₅',...,2_{N}') der zweiten Transceiveranordnung (7") jeweils angeordnet ist.

14. Kommunikationssystem (8) gemäß einem der Patentansprüche 11 bis 13,
**dadurch gekennzeichnet,**
**dass** die ersten Signalleitungen (5) in der einen Transceiveranordnung (7) jeweils das erste Sendesignal, die ersten Signalleitungen (5) in der zweiten Transceiveranordnung (7') jeweils das zugehörige erste Empfangssignal, die zweiten Signalleitungen (6) in der zweiten Transceiveranordnung (7') jeweils das zweite Sendesignal und die zweiten Signalleitungen (6) in der ersten Transceiveranordnung (7') jeweils das zugehörige zweite Empfangssignal übertragen.

15. Kommunikationssystem (8) gemäß einem der Patentansprüche 11 bis 14,
**dadurch gekennzeichnet,**
**dass** die erste Transceiveranordnung (7) und die zweite Transceiveranordnung (7') im Nahfeldbereich zueinander angeordnet sind, wobei ein axialer Abstand zwischen der ersten Transceiveranordnung (7) und der zweiten Transceiveranordnung (7') vorzugsweise kleiner als 10 cm, insbesondere vorzugsweise kleiner als 5 cm und ganz besonders vorzugsweise kleiner als 1 cm ist.
